(19) Europäisches Patentamt
European Patent Office
Office européen des brevets

(11) **EP 4 011 110 B1**

(12) **EUROPEAN PATENT SPECIFICATION**

(45) Date of publication and mention
of the grant of the patent:
**18.09.2024 Bulletin 2024/38**

(21) Application number: **19940705.7**

(22) Date of filing: **06.08.2019**

(51) International Patent Classification (IPC):
**H04W 24/00** (2009.01)    **H04B 7/04** (2017.01)
**H04B 7/06** (2006.01)

(52) Cooperative Patent Classification (CPC):
**H04W 24/10; H04B 7/0456; H04B 7/0636;
H04B 7/0639; H04B 7/0663**

(86) International application number:
**PCT/CN2019/099349**

(87) International publication number:
**WO 2021/022464 (11.02.2021 Gazette 2021/06)**

(54) **CHANNEL STATE INFORMATION REFERENCE SIGNAL (CSI-RS) RESOURCES AND PORTS OCCUPATION FOR FINER PRECODING MATRIX INDICATION (PMI) GRANULARITY**

KANALZUSTANDSINFORMATIONSREFERENZSIGNAL (CSI-RS)-RESSOURCEN UND PORTBELEGUNG FÜR FEINERE GRANULARITÄT EINER VORCODIERUNGSMATRIXANZEIGE (PMI)

OCCUPATION DE RESSOURCES ET DE PORTS DE SIGNAL DE RÉFÉRENCE D'INFORMATIONS D'ÉTAT DE CANAL (RS-CSI) POUR UNE GRANULARITÉ D'INDICATION DE MATRICE DE PRÉCODAGE (PMI) PLUS FINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.06.2022 Bulletin 2022/24**

(73) Proprietor: **QUALCOMM INCORPORATED**
San Diego, California 92121-1714 (US)

(72) Inventors:
• **HAO, Chenxi**
**San Diego, CA 92121-1714 (US)**
• **XIAO, Lei**
**San Diego, CA 92121-1714 (US)**
• **ZHANG, Yu**
**San Diego, CA 92121-1714 (US)**
• **WEI, Chao**
**San Diego, CA 92121-1714 (US)**
• **CHEN, Wanshi**
**San Diego, CA 92121-1714 (US)**
• **GAAL, Peter**
**San Diego, CA 92121-1714 (US)**

(74) Representative: **Bardehle Pagenberg Partnerschaft mbB
Patentanwälte Rechtsanwälte
Prinzregentenplatz 7
81675 München (DE)**

(56) References cited:
**EP-A1- 3 282 632**    **EP-A1- 3 562 056**
**WO-A1-2016/076679**    **WO-A1-2018/059478**
**WO-A1-2018/230967**    **WO-A1-2019/031940**
**WO-A1-2019/103580**    **US-A1- 2018 083 676**
**US-A1- 2020 412 431**

• **NTT DOCOMO; INC: "NR Access Technology", 3GPP DRAFT; RP-182805 SR ON NR FOR RAN_82_RM, vol. TSG RAN, 13 December 2018 (2018-12-13), Sorrento, Italy, pages 1 - 43, XP051575430**
• **HUAWEI; HISILICON: "Discussion on CSI enhancement", 3GPP DRAFT; R1-1906028, vol. RAN WG1, 3 May 2019 (2019-05-03), Reno, USA, pages 1 - 18, XP051708070**

**Description**

**BACKGROUND**

**Field of the Disclosure**

Aspects of the present disclosure relate to wireless communications, and more particularly, to techniques for determining a channel state information (CSI) reporting configuration based on user equipment (UE) capabilities.

**Description of Related Art**

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (e.g., 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies.

WO 2019/103580 A1 relates to a method for transmitting, by a user equipment (UE), a CSI (Channel State Information) report in a wireless communication system. More specifically, the method includes: receiving, from a base station, downlink control information (DCI) including information for triggering the CSI report; computing CSI based on the number of symbols related to a time for computing the CSI; and transmitting the CSI report to the base station, in which the number of symbols related to the time for computing the CSI is defined based on information for the number of antenna ports, information for a CSI-RS resource, information for a bandwidth granularity, and information for a CSI codebook type.

WO 2018/230967 A1 relates to a CSI reporting method by a terminal in a wireless communication system which can comprise the steps of: receiving, from a base station, CSI configuration information for CSI reporting; and reporting, to the base station, CSI generated on the basis of the CSI configuration information. If the CSI comprises CQI and defined is a CQI table in which different CQI indexes are allocated by different MCS levels for the CQI reporting, the CSI configuration information comprises a CQI index range reportable by the terminal in the CQI table and/or CQI configuration information relating to the interval between the CQI indexes reportable by the terminal in the CQI index range.

SUMMARY

The invention is defined by the independent claims. Preferred embodiments of the invention are stipulated in the dependent claims. While several embodiments and/or examples have been disclosed in the description, the subject matter for which protection is sought is limited to those examples and/or embodiments which are encompassed by the scope of the appended claims. Embodiments and/or examples that do not fall under the scope of the claims are useful for understanding the invention.

**SUMMARY**

The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide advantages that include improved CSI reporting configurations based on UE capabilities.

Certain aspects provide a method for wireless communication that may be performed by a user equipment (UE). The method generally includes receiving a channel state information (CSI) reporting configuration comprising one or more CSI reporting settings. Each CSI reporting setting is associated with one or more subbands for CSI. Each subband for CSI includes a frequency domain (FD) unit for channel quality information (CQI) feedback and one or more FD units for precoding matrix indicator (PMI) feedback. The method also includes determining, for each of the CSI reporting settings, at least one of an amount of CSI reference signal (CSI-RS) resources occupation or an amount of CSI-RS ports occupation, based at least in part on (i) a number of the FD units for PMI feedback within a single FD unit for CQI feedback or (ii) a number of FD units for PMI feedback within all of the subbands for CSI.

Certain aspects provide a method for wireless communication that may be performed by a network entity, such as a base station. The method generally includes determining one or more channel state information (CSI) reporting settings for a user equipment (UE). Each CSI reporting setting is associated with one or more subbands for CSI. Each subband for CSI includes a frequency domain (FD) unit for channel quality information (CQI) feedback and one or more FD units for precoding matrix indicator (PMI) feedback. The method also includes determining, for each of the CSI reporting settings, at least one of an amount of CSI reference signal (CSI-RS) resources occupation or an amount of CSI-RS ports occupation, based at least in part on (i) a number of the FD units for PMI feedback within a single FD unit for CQI feedback or (ii) a number of FD units for PMI feedback within all of the subbands for CSI.

Aspects of the present disclosure provide means for, apparatus, processors, and computer-readable mediums for performing the methods described herein.

Aspects of the present disclosure provide means for, apparatus, processors, and computer-readable mediums for performing techniques and methods that may be complementary to the operations by the UE described herein, for example, by a BS.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

**BRIEF DESCRIPTION OF THE DRAWINGS**

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain typical aspects of this disclosure and are therefore not to be considered limiting of its scope, for the description may admit to other equally effective aspects.

**FIG. 1** is a block diagram conceptually illustrating an example telecommunications system, in accordance with certain aspects of the present disclosure.

**FIG. 2** shows an example Release 16 Type II codebook, in accordance with certain aspects of the present disclosure.

**FIG. 3** shows example subbands configured for channel state information (CSI) reporting, in accordance with certain aspects of the present disclosure.

**FIG. 4** is an example table showing subband sizes for bandwidth parts (BWPs) and associated subband sizes, in accordance with certain aspects of the present disclosure.

**FIG. 5** shows an example of PMI FD units having finer granularity than a CQI FD unit, in accordance with certain aspects of the present disclosure.

**FIGs. 6A-6C** show different examples of UE capability signaling information elements, in accordance with certain aspects of the present disclosure.

**FIG. 7** is a flow diagram illustrating example operations by a UE for wireless communication, in accordance with certain aspects of the present disclosure.

**FIG. 8** is a flow diagram illustrating example operations by a network entity for wireless communication, in accordance with certain aspects of the present disclosure.

**FIG. 9** illustrates a communications device that may include various components configured to perform operations for the techniques disclosed herein, in accordance with aspects of the present disclosure.

**FIG. 10** illustrates a communications device that may include various components configured to perform operations for the techniques disclosed herein, in accordance with aspects of the present disclosure.

**FIG. 11** is a block diagram conceptually illustrating a design of an example base station (BS) and user equipment (UE), in accordance with certain aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

**DETAILED DESCRIPTION**

Aspects of the present disclosure provide apparatus, methods, processing systems, and computer readable mediums for determining a CSI reporting configuration based on UE reported capabilities of the maximum amount of supported CSI reference signal (CSI-RS) resources and/or maximum amount of supported CSI-RS ports.

In some networks, wireless communications with a large number of antennas can be enabled with information obtained via CSI acquisition. One technique for acquiring CSI at the gNB in the downlink direction is via the UE calculating and reporting PMI for DL channel(s) based on CSI-RS transmitted by the gNB. However, one issue with this technique is that it may take a significant amount of UE memory to store channel estimation results and intermediate results of the CSI computation. To address this, some communication systems (e.g., Rel-15 communication system) allow for CSI reporting configurations to be subject to UE capability. For example, these communication systems may allow for UE capability signaling of the maximum number of resources and/or ports supported by the UE, so that the gNB can trigger CSI report(s) subject to the reported capability of the UE.

However, later communication systems (e.g., Rel-16 or later) may use a new Type II codebook that supports a finer PMI granularity (e.g., relative to Rel-15 and earlier releases). This finer PMI granularity can cause the CSI computation to at least double in complexity. Accordingly, it may be desirable to provide improved techniques that enable the UE and/or gNB to determine the resource and ports occupation of each CSI report, such that the CSI reporting configuration is subject to the UE capabilities.

Aspects provide improved techniques for determining CSI-RS resources and CSI-RS ports occupation for finer PMI granularity. In particular, aspects provide a new rule for determining the CSI-RS resources and ports occupation when a particular type of codebook (e.g., Rel-16 Type II codebook) is used for CSI reporting.

In one aspect, a UE may receive a CSI reporting configuration that includes one or more CSI reporting settings. Each CSI reporting setting may be associated with one or more subbands for CSI. Each subband for CSI may include a frequency domain (FD) unit for channel quality information (CQI) feedback and one or more FD units for precoding matrix indicator (PMI) feedback. The UE may determine, for each of the CSI reporting settings, at least one of an amount of CSI reference signal (CSI-RS) resources occupation or an amount of CSI-RS ports occupation, based at least in part on (i) a number of the FD units for PMI feedback within a single FD unit for CQI feedback or (ii) a number of FD units for PMI feedback within all of the subbands for CSI.

In some aspects, the UE may send (and the gNB may receive) an indication of a CSI processing capability of the UE. The CSI processing capability may include an indication of at least one of a number of CSI-RS resources supported by the UE or a number of CSI-RS ports supported by the UE. The UE and/or gNB may determine at least one of a total amount of CSI-RS resource occupation or a total amount of CSI-RS ports occupation based at least in part on the determined amount of CSI-RS resource occupation of each CSI reporting setting or the determined amount of CSI-RS ports occupation of each CSI reporting setting. The UE may perform CSI calculation and reporting of the one or more CSI reporting settings if at least one of the total amount of CSI-RS resource occupation is smaller than the indicated number of CSI-RS resources supported by the UE or the total amount of CSI-RS ports occupation is smaller than the indicated number of CSI-RS ports supported by the UE.

Doing so allows the UE and gNB to more efficiently determine CSI-RS resources/ports occupation (for certain types of codebooks), which in turn enables the BS to provide (and the UE to receive) CSI reporting configurations that are more efficiently tailored to the UE capabilities, relative to conventional techniques.

The following description provides examples of traffic burst awareness in communication systems, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs. In some cases, a 5G NR RAT network may be deployed.

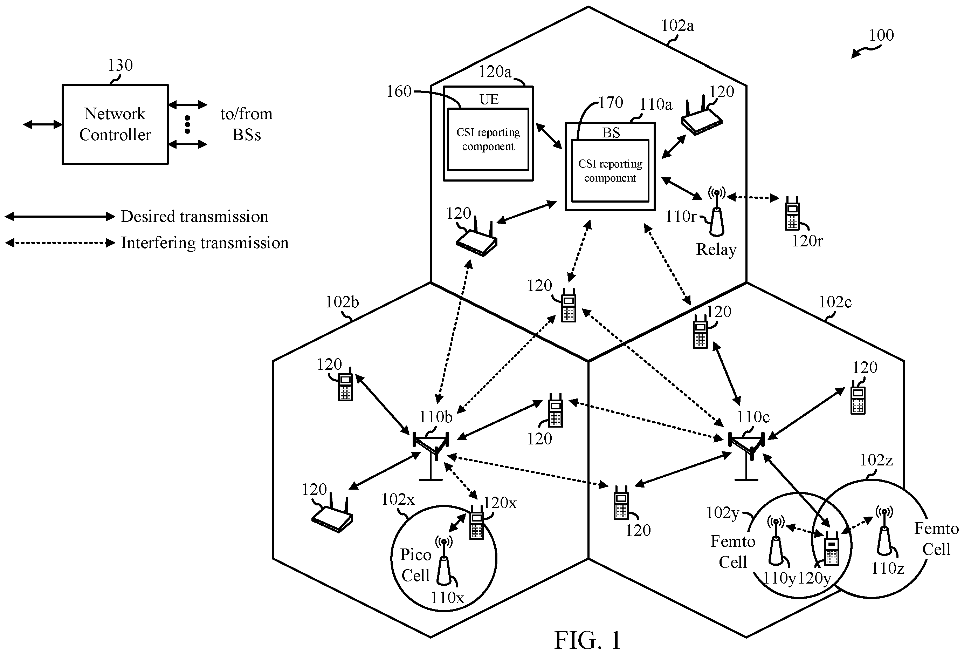

**FIG. 1** illustrates an example wireless communication network 100 in which aspects of the present disclosure may be performed. For example, the wireless communication network 100 may be an NR system (e.g., a 5G NR network).

As illustrated in **FIG. 1,** the wireless communication network 100 may include a number of base stations (BSs) 1 10a-z (each also individually referred to herein as BS 110 or collectively as BSs 110) and other network entities. A BS 110 may provide communication coverage for a particular geographic area, sometimes referred to as a "cell", which may be stationary or may move according to the location of a mobile BS 110. In some examples, the BSs 110 may be interconnected to one another and/or to one or more other BSs or network nodes (not shown) in wireless communication network 100 through various types of backhaul interfaces (e.g., a direct physical connection, a wireless connection, a virtual network, or the like) using any suitable transport network. In the example shown in **FIG. 1,** the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple cells. The BSs 110 communicate with user equipment (UEs) 120a-y (each also individually referred to herein as UE 120 or collectively as UEs 120) in the wireless communication network 100. The UEs 120 (e.g., 120x, 120y, etc.) may be dispersed throughout the wireless communication network 100, and each UE 120 may be stationary or mobile.

As illustrated, UE 120a includes a CSI reporting component 160, which is configured to implement one or more techniques described herein for determining CSI-RS resources/ports occupation for CSI reporting. Using the CSI reporting component 160, the UE 120a may receive a CSI reporting configuration that includes one or more CSI reporting settings. Each CSI reporting setting may be associated with one or more subbands for CSI. Each subband for CSI may include a FD unit for CQI feedback and one or more FD units for PMI feedback. The UE 120a may determine, for each of the CSI reporting settings, at least one of an amount of CSI-RS resources occupation or an amount of CSI-RS ports occupation, based at least in part on (i) a number of the FD units for PMI feedback within a single FD unit for CQI feedback or (ii) a number of FD units for PMI feedback within all of the subbands for CSI.

Using the CSI reporting component 160, the UE 120a may send to a gNB (e.g., BS 110a) an indication of a CSI processing capability of the UE. The CSI processing capability may include an indication of at least one of a number of CSI-RS resources supported by the UE or a number of CSI-RS ports supported by the UE. The UE 120a may determine (e.g., using the CSI reporting component 160) at least one of a total amount of CSI-RS resource occupation or a total amount of CSI-RS ports occupation based at least in part on the determined amount of CSI-RS resource occupation of each CSI reporting setting or the determined amount of CSI-RS ports occupation of each CSI reporting setting. The UE 120a may perform (e.g., using the CSI reporting component 160) CSI calculation and reporting of the one or more CSI reporting settings if at least one of the total amount of CSI-RS resource occupation is smaller than the indicated number of CSI-RS resources supported by the UE or the total amount of CSI-RS ports occupation is smaller than the indicated number of CSI-RS ports supported by the UE.

As also illustrated, BS 110a (e.g., network entity or network node, such as a gNB) includes a CSI reporting component 170, which is configured to implement one or more techniques described herein for determining CSI-RS resources/ports occupation in order to determine a CSI reporting configuration. Using the CSI reporting component 170, the BS 110a may determine one or more CSI reporting settings for a UE (e.g., UE 120a). Each CSI reporting setting may be associated with one or more subbands for CSI. Each subband for CSI may include a FD unit for CQI feedback and one or more FD units for PMI feedback. The BS 110a may determine (e.g., via the CSI reporting component 170), for each of the CSI reporting settings, at least one of an amount of CSI-RS resources occupation or an amount of CSI-RS ports occupation, based at least in part on (i) a number of the FD units for PMI feedback within a single FD unit for CQI feedback or (ii) a number of FD units for PMI feedback within all of the subbands for CSI.

Using the CSI reporting component 170, the BS 110a may receive an indication of a CSI processing capability of the UE. The CSI processing capability may include an indication of at least one of a number of CSI-RS resources supported by the UE or a number of CSI-RS ports supported by the UE. The BS 110a may determine (e.g., with the CSI reporting component 170) at least one of a total amount of CSI-RS resource occupation or a total amount of CSI-RS ports occupation based at least in part on the determined amount of CSI-RS resource occupation of each CSI reporting setting or the determined amount of CSI-RS ports occupation of each CSI reporting setting. The BS 110a may signal (e.g., via the CSI reporting component 170) a CSI reporting configuration that includes the one or more CSI reporting settings to the UE if at least one of the total amount of CSI-RS resources occupation is smaller than the indicated number of CSI-RS resources supported by the UE or the total amount of CSI-RS ports occupation is smaller than the indicated number of CSI-RS ports supported by the UE.

Wireless communication network 100 may also include relay stations (e.g., relay station 110r), also referred to as relays or the like, that receive a transmission of data and/or other information from an upstream station (e.g., a BS 110a or a UE 120r) and sends a transmission of the data and/or other information to a downstream station (e.g., a UE 120 or a BS 110), or that relays transmissions between UEs 120, to facilitate communication between devices.

A network controller 130 may couple to a set of BSs 110 and provide coordination and control for these BSs 110. The network controller 130 may communicate with the BSs 110 via a backhaul. The BSs 110 may also communicate with one another (e.g., directly or indirectly) via wireless or wireline backhaul.

Example CSI Report Configuration

As noted, in some systems, wireless communications may be enabled with CSI. As used herein, CSI may refer to channel properties of a communication link. The CSI may represent the combined effects of, for example, scattering, fading, and power decay with distance between a transmitter and receiver. Channel estimation using pilots, such as CSI-RSs, may be performed to determine these effects on the channel. CSI may be used to adapt transmissions based on the current channel conditions, which is useful for achieving reliable communication, in particular, with high data rates in multi-antenna systems. CSI is typically estimated at the receiver, quantized, and fed back to the transmitter.

The time and frequency resources that can be used by the UE to report CSI are controlled by the gNB. CSI may consist of CQI, PMI, CSI-RS resource indicator (CRI), SS/PBCH Block Resource indicator (SSBRI), layer indicator (LI), rank indicator (RI) and/or L1-RSRP.

The network (e.g., gNB) may configure UEs for CSI reporting. For example, the gNB configures the UE with a CSI report configuration (also referred to as a CSI reporting configuration) or with multiple CSI report configurations. The CSI report configuration may be provided to the UE via higher layer signaling, such as radio resource control (RRC) signaling (e.g., *CSI-ReportConfig*). The CSI report configuration may be associated with CSI-RS resources for channel measurement (CM), interference measurement (IM), or both. The CSI report configuration configures CSI-RS resources for measurement (e.g., *CSI-ResourceConfig*). The CSI-RS resources provide the UE with the configuration of CSI-RS ports, or CSI-RS port groups, mapped to time and frequency resources (e.g., resource elements (REs)). CSI-RS resources can be zero power (ZP) or non-zero power (NZP) resources. At least one NZP CSI-RS resource may be configured for CM.

The CSI report configuration also configures the CSI parameters (sometimes referred to as quantities) to be reported. Three codebooks include Type I single panel, Type I multi-panel, and Type II single panel. Regardless which codebook is used, the CSI report may include the CQI, PMI, CRI, and/or RI. The structure of the PMI may vary based on the codebook. The CRI, RI, and CQI may be in a first part (Part I) and the PMI may be in a second part (Part II) of the CSI report. For the Type I single panel codebook, the PMI may consist of a W1 matrix (e.g., subest of beams) and a W2 matrix (e.g., phase for cross polarization combination and beam selection). For the Type I multi-panel codebook, compared to type I single panel codebook, the PMI further comprises a phase for cross panel combination. For the Type II single panel codebook, the PMI is a linear combination of beams; it has a subset of orthogonal beams to be used for linear combination and has per layer, per polarization, amplitude and phase for each beam. For the PMI of any type, there can be wideband (WB) PMI and/or subband (SB) PMI as configured.

The CSI report configuration may configure the UE for aperiodic, periodic, or semi-persistent CSI reporting. For periodic CSI, the UE may be configured with periodic CSI-RS resources. Periodic CSI and semi-persistent CSI report on physical uplink control channel (PUCCH) may be triggered via RRC or a medium access control (MAC) control element (CE). For aperiodic and semi-persistent CSI on the physical uplink shared channel (PUSCH), the BS may signal the UE a CSI report trigger indicating for the UE to send a CSI report for one or more CSI-RS resources, or configuring the CSI-RS report trigger state (e.g., *CSI-AperiodicTriggerStateList* and *CSI-SemiPersistentOnPUSCH-TriggerState-List*). The CSI report trigger for aperiodic CSI and semi-persistent CSI on PUSCH may be provided via downlink control information (DCI). The CSI-RS trigger may be signaling indicating to the UE that CSI-RS will be transmitted for the CSI-RS resource.

The UE may report the CSI feedback based on the CSI report configuration and the CSI report trigger. For example, the UE may measure the channel associated with CSI for the triggered CSI-RS resources. Based on the measurements, the UE may select a preferred CSI-RS resource. The UE reports the CSI feedback for the selected CSI-RS resource. LI may be calculated conditioned on the reported CQI, PMI, RI and CRI; CQI may be calculated conditioned on the reported PMI, RI and CRI; PMI may be calculated conditioned on the reported RI and CRI; and RI may be calculated conditioned on the reported CRI.

Example CQI Reporting With PMI Frequency Domain Units

As discussed above, a UE may be configured for CSI reporting, for example, by receiving a CSI configuration. In certain systems (e.g., Release 15 5G NR), the UE may be configured to report at least a Type II precoder across configured frequency domain (FD) units:

$$w_r = \sum_{i=0}^{2L-1} b_i \cdot c_i, \text{ where } c_i = \left[ \underbrace{c_{i,0} \quad \cdots \quad c_{i,N_3-1}}_{N_3} \right],$$

where $b_i$ is the selected beam, $c_i$ is the set of linear combination coefficients, $L$ is the number of selected spatial beams, and $N_3$ corresponds to the number of frequency units (e.g., subbands, resource blocks (RBs), etc.). In certain systems (e.g., Rel-16 5G NR), the UE may use a precoder for a certain layer $l$ on $N_3$ subbands is expressed as a size-$P \times N_3$ matrix $W_l$:

$$W_l = \begin{bmatrix} \sum_{i=0}^{L-1} \sum_{m=0}^{M-1} v_{m_1^{(i)},m_2^{(i)}} p_{i,m}^{(1)} p_{i,m}^{(2)} \varphi_{i,m} \cdot f_{m_3^{(m)}}^{H} \\ \sum_{i=0}^{L-1} \sum_{m=0}^{M-1} v_{m_1^{(i)},m_2^{(i)}} p_{i+L,m}^{(1)} p_{i+L,m}^{(2)} \varphi_{i+L,m} \cdot f_{m_3^{(m)}}^{H} \end{bmatrix},$$

In $W_l$, $L$ is the number of spatial domain (SD) basis (or bases) (e.g., spatial beams) configured by RRC signaling of the CSI report configuration, $v_{m_1^{(i)},m_2^{(i)}}$ with $i = 0,1,\cdots,L-1$ is a $\frac{P}{2} \times 1$ SD basis and it is applied to both polarizations. The SD bases are DFT based and the SD basis with index $m_1^{(i)}$ and $m_2^{(i)}$ is written as

$$v_{m_1^{(i)},m_2^{(i)}} = \left[ u_{m_2^{(i)}} \quad e^{\frac{j2\pi m_1^{(i)}}{O_1 N_1}} u_{m_2^{(i)}} \quad \cdots \quad e^{\frac{j2\pi m_1^{(i)}(N_1-1)}{O_1 N_1}} u_{m_2^{(i)}} \right]^T,$$

$$u_{m_2^{(i)}} = \left[ 1 \quad e^{\frac{j2\pi m_2^{(i)}}{O_2 N_2}} \quad \cdots \quad e^{\frac{j2\pi m_2^{(i)}(N_2-1)}{O_2 N_2}} \right],$$

where $N_1$ and $N_2$ represents the first and the second dimension of the configured codebook, respectively. In some cases, they refer to the number of antenna elements on the vertical and horizontal dimension at the base station, respectively. The oversampling factor are denoted by $O_1$ and $O_2$.

Moreover, $f_{m_3^{(m)}}$ with $m = 0,1,\cdots M$ is a $N_3 \times 1$ FD basis (i.e., $f_{m_3^{(m)}}^{H}$ is a $1 \times N_3$ row vector) which is also known as the transferred domain basis. $M_l$ is the number of FD bases selected for layer $l$ and it is derived based on RRC configuration. The FD bases may be DFT bases, and the FD basis with index $m_3^{(m)} \in \{0,1,\cdots N_3 - 1\}$ is expressed as

$$f_{m_3^{(m)}} = \left[ 1 \quad e^{\frac{j2\pi m_3^{(m)}}{N_3}} \quad \cdots \quad e^{\frac{j2\pi m_3^{(m)}(N_3-1)}{N_3}} \right].$$

Linear combination coefficient comprises three parts, i.e., $p_{i,l,m}^{(1)}$, $p_{i,l,m}^{(2)}$, $\varphi_{i,l,m}$. The parameter $p_{i,l,m}^{(1)}$ rep-

resents an amplitude reference for the first polarization, while $p^{(1)}_{i+L,l,m}$ represents the amplitude reference for the second polarization. They are common to all the coefficients associated with the corresponding polarization, i.e.,

$$p^{(1)}_{i,l,m} = p^{(1)}_{i',l,m'} \text{ and } p^{(1)}_{i+L,l,m} = p^{(1)}_{i'+L,l,m'}$$

, $\forall i' \in \{i' \neq i | i' = 0,1, \cdots L - 1\}$, $\forall m' \in \{m' \neq m | m' = 0,1, \cdots M\}$. Besides, the parameter $p^{(2)}_{i,l,m}$ represents a (differential) amplitude the coefficient associated with SD basis with index $m^{(i)}_1$ and $m^{(2)}_2$, and associated with the FD basis with index $m^{(m)}_3$ in the first polarization, while $p^{(2)}_{i+L,m}$ represents a (differential) amplitude the coefficient associated with SD basis with index $m^{(i)}_1$ and $m^{(2)}_2$, and associated with the FD basis with index $m^{(m)}_3$ in the second polarization. Similarly, the parameter $\varphi_{l,m}$ represents a (differential) amplitude the coefficient associated with SD basis with index $m^{(i)}_1$ and $m^{(2)}_2$, and associated with the FD basis with index $m^{(m)}_3$ in the first polarization, while $\varphi_{i+L,m}$ represents a (differential) amplitude the coefficient associated with SD basis with index $m^{(i)}_1$ and $m^{(2)}_2$, and associated with the FD basis with index $m^{(m)}_3$ in the second polarization.

For RI={1,2}, for each layer, the number of FD bases $M = M_{1,2}$, wherein the value of $M_{1,2} = \left\lceil p \times \frac{N_3}{R} \right\rceil$ is determined by a ratio $p$ configured by RRC and $R$ is the number of precoding matrix indicator (PMI) subbands within one CQI subband. For RI={3,4}, the number of FD bases $M = M_{3,4}$, wherein the value of $M_{3,4} = \left\lceil v_0 \times \frac{N_3}{R} \right\rceil$ is determined by a ratio $v_0$ configured by RRC. Possible combinations of $p$ and $v_0$ include $(p, v_0) = \left(\frac{1}{2}, \frac{1}{4}\right), \left(\frac{1}{4}, \frac{1}{4}\right), \left(\frac{1}{4}, \frac{1}{8}\right)$. Moreover, for each layer of RI={1,2,3,4}, the UE is configured to report a subset of total $2LM_{1,2}$ or total $2LM_{3,4}$ coefficients, the unreported coefficients are set to zero. The max number of coefficients to be reported per layer is $K_0$ and the max total number of coefficients to be reported across all layers is $2K_0$, where $K_0 = \left\lceil \beta \times 2LM_{1,2} \right\rceil$ and $\beta = \left\{\frac{1}{4}, \frac{1}{2}, \frac{3}{4}\right\}$ is RRC configured. Note that for no matter rank, $K_0$ is calculated using the $M_{1,2}$.

Each CSI report configuration may be associated with a single downlink bandwidth part (BWP). The CSI report setting configuration may define a CSI reporting band as a subset of subbands of the BWP. The associated DL BWP may indicated by a higher layer parameter (e.g., *bwp-Id*) in the CSI report configuration for channel measurement and contains parameter(s) for one CSI reporting band, such as codebook configuration, time-domain behavior, frequency granularity for CSI, measurement restriction configurations, and the CSI-related quantities to be reported by the UE. Each CSI resource setting may be located in the DL BWP identified by the higher layer parameter, and all CSI resource settings may be linked to a CSI report setting have the same DL BWP.

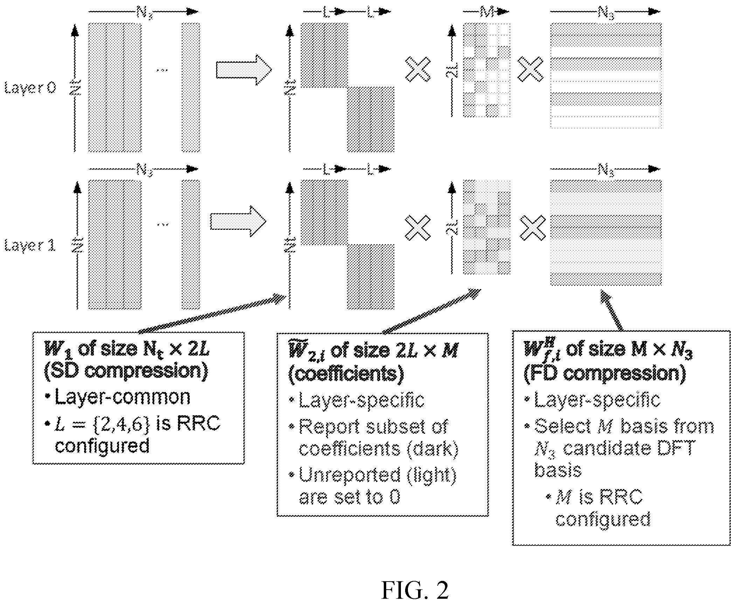

In some systems (e.g., Rel-16), the UE may be configured to report CSI using a three stage codebook with FD compression. **FIG. 2** shows one reference example of a three-stage codebook with FD compression, in accordance with certain aspects of the present disclosure. **FIG. 2** shows the compressed precoder feedback:

$$W = W_1 * W_{2,i} * W^H_{f,i}$$

where $i$ is the $i^{\text{th}}$ layer and the precoders for a given layer (e.g., Layer 0 or Layer 1) is given by the size $N_t \times N_3$. In some examples, if the number of CQI subbands $\times$ R is less than or equal to 13 (e.g., # CQI SB $\times$ R $\leq$ 13), then $N_3$ = # CQI SB $\times$ R. In some examples (e.g., # CQI SB $\times$ R > 13), $N_3$ may be the smallest integer equal to $(2^a \cdot 3^b \cdot 5^c)$ that is greater than the # CQI SB $\times$ R. Alternatively, in some examples (e.g., # CQI SB $\times$ R > 13), the PMI subbands are divided into two segments, each segment has size equal to $2^a \cdot 3^b \cdot 5^c$, and $N_3$ may be taken as that value. In yet other examples, $N_3$ may be predefined to be equal to # CQI SB $\times$ R. $L$ may be common across spatial domains and may have a value selected (e.g., RRC configured) from the following set {2, 4, 6}. In some cases, $L$ = 6 may apply to situations in which RI = {1, 2}. FD compression may be layer-specific. For example, for $\text{RI} = \{1, 2\}, M = \left\lceil p \times \frac{N_3}{R} \right\rceil$ and for

RI = {3, 4}, $M = \left\lceil v_0 \times \frac{N_3}{R} \right\rceil$, where $(p, v_0) = \left(\frac{1}{2}, \frac{1}{4}\right), \left(\frac{1}{4}, \frac{1}{4}\right)$, and $\left(\frac{1}{4}, \frac{1}{8}\right)$ is RRC configured. The non-zero coefficients (NNZC) may also be layer-specific. For example, for each layer of RI = {1, 2, 3, 4}, the maximum NNZC per layer may be $K_0 = \lceil \beta \times 2LM \rceil$, where $\beta = \left\{\frac{1}{4}, \frac{1}{2}, \frac{3}{4}\right\}$ is RRC configured and $M = \left\lceil p \times \frac{N_3}{R} \right\rceil$. For RI = {1, 2, 3, 4}, the maximum NNZC across all layers may be $2K_0$.

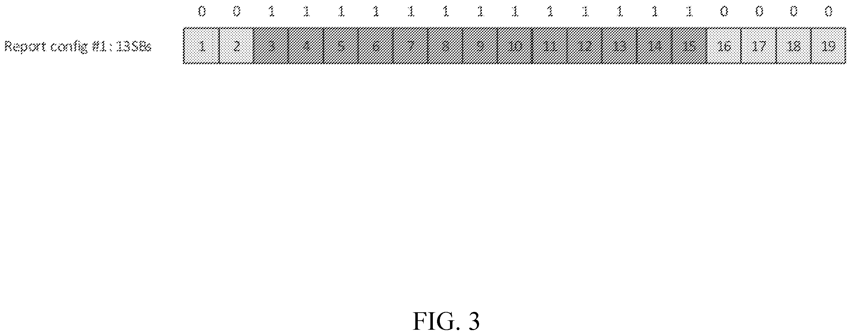

The UE may further receive an indication of the subbands for which the CSI feedback is requested. **FIG. 3** shows example subbands configured for CSI reporting, in accordance with certain aspects of the present disclosure. In the example in **FIG. 3,** 13 of the 19 total subbands are requested for CSI reporting. In some examples, a subband mask is configured for the requested subbands for CSI reporting. The UE computes precoders for each requested subband and finds the PMI that matches the computed precoder on each of the subbands.

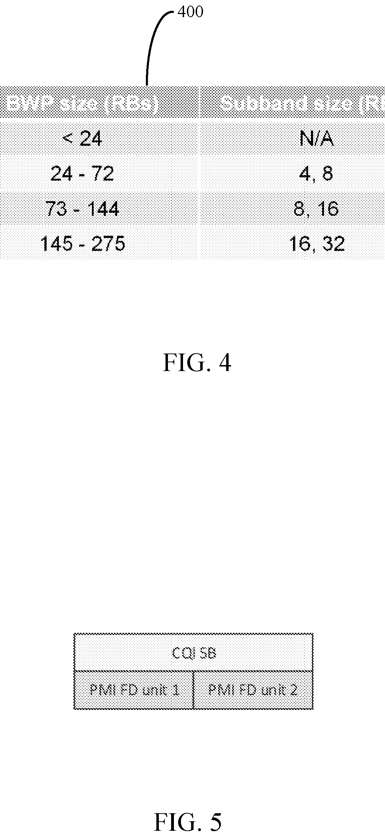

In certain systems (e.g., Rel-15 5G NR) for CSI reporting, the UE can be configured via higher layer signaling (e.g., in the CSI report configuration) with one out of two possible subband sizes (e.g., *reportFreqConfiguration* contained in a *CSI-ReportConfig*) which indicates a frequency granularity of the CSI report, where a subband may be defined as $N_{\text{PRB}}^{\text{SB}}$ contiguous physical resource blocks (PRBs) and depends on the total number of PRBs in the bandwidth part, for example, as shown in the Table 400 illustrated in **FIG. 4.** As shown in **FIG. 4,** in such systems, the maximum number of subbands may be 19 subbands.

In certain systems (e.g., Rel-16 and beyond), a finer granularity can be used for CSI. For example, a subband size for PMI may smaller than the subband sizes shown in **FIG. 4.** The finer CSI granularity may lead to much larger CSI computation complexity than larger CSI granularity.

According to certain aspects, the UE may be configured to report subband PMI. As discussed above, the CSI configuration may be associated with a BWP, and the BWP may be associated with a bandwidth size and subband size. According to certain aspects, the CSI granularity (e.g., the PMI) spans X RBs. As discussed above, the frequency division (FD) unit size for PMI may be a finer granularity. For example, the subband size for PMI may be smaller than the subband sizes shown in **FIG. 3.** In some examples, granularity may be as small as 1 RB or{2,4} configured by higher-layers.

In some examples, the PMI subband size may be equal to the CQI subband size. In some examples, the PMI granularity may be smaller than a CQI granularity. For example, as shown in **FIG. 5,** the PMI subband size may be equal to X, where X = (CQI subband size)/*R*, and where *R* > 1 is a predefined integer. Thus, the number of FD units (e.g., the number of subbands) may be up to the total number of configured subbands * *R* (e.g., 19R). **FIG. 5** shows a particular example where R is equal to 2, such that the number of PMI FD units may be up to 38. In some cases, for the FD compression unit size, the PMI subband size = CQI subband size may be the default configuration, and the PMI subband size = CQI subband size/R may be a secondary configuration. In some cases, whether the secondary configuration is activated and/or supported may be based on one or more parameters, including but not limited to, at least one of a UE capability, a number of FD compression units, CPU occupation, latency constraint, bandwidth constraint, number of simultaneous resources and ports occupation, etc.

Example UE Capability Signaling

As noted, some systems (e.g., Rel. 15 and beyond) allow for CSI reporting configurations to be subject to UE capability. In Rel. 15 (and beyond), for example, the UE can signal the maximum number of resources and/or the maximum number of ports per codebook, per band, per carrier aggregation (CA) band combination, etc.

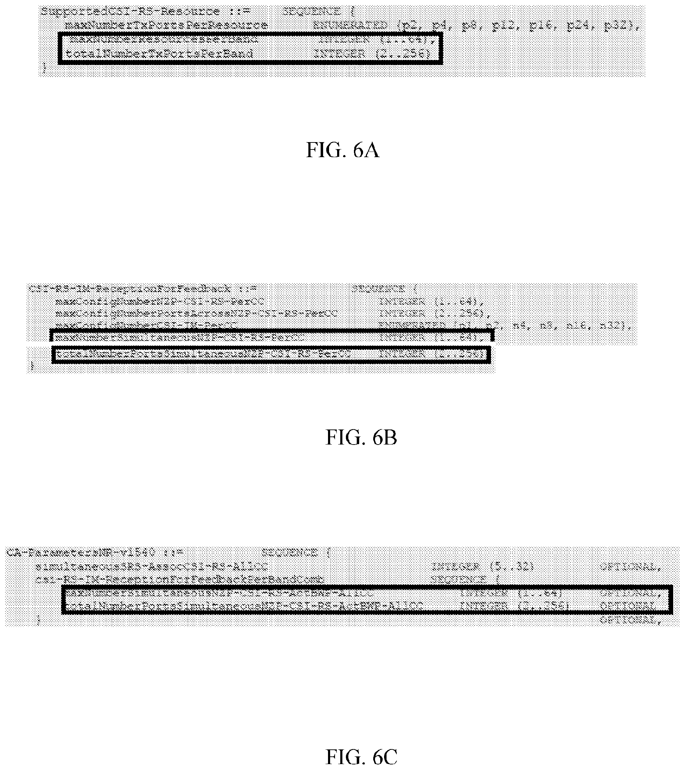

In one aspect, the UE can use the RRC information element "CodebookParameters" to signal the capabilities per codebook per band. For example, as shown in **FIG. 6A,** the UE can signal the "maxNumberResourcesPerBand" and "totalNumberTxPortsPerBand" for each type of Type I single panel, type I multi-panel, Rel-15 Type II, Rel-15 Type II port selection, etc.

In one aspect, the UE can use the RRC information element "MIMO-ParametersPerBand" to signal the capabilities per band (e.g., regardless of the codebook type). For example, as shown in **FIG. 6B,** the UE can signal the "maxNumberSimultaneousNZP-CSI-RS-PerCC" and "totalNumberPortsSimultaneous NZP-CSI-RS-PerCC" per band.

In one aspect, the UE can use the RRC information element "CA-ParametersNR" to signal the capabilities per band-band combination (e.g., for CA scenarios). For example, as shown in **FIG. 6C,** the UE can signal the "maxNumberSimultaneousNZP-CSI-RS-ActBWP-AllCC" and the "totalNumberPorts SimultaneousNZP-CSI-RS-ActBWP-AllCC" for each band-band combination.

Regardless of the capability signaling, the number of resources and the number of ports configured by the gNB (e.g., in each CSI report and across all CSI reports) should be subject to the capability reported by the UE. For example, if the gNB configures $N$ CSI reports, each with M CSI-RS resources, then the configuration should satisfy $MN \leq$ UE capability (of any of the three aspects described above).

*Example CSI-RS resources and ports occupation for finer PMI granularity*

In current systems (e.g., Rel-15), when determining the CSI reporting configuration subject to the UE capability, if a CSI-RS resource is referred by N CSI reporting settings, then the CSI-RS resource and the CSI-RS ports within the CSI-RS resources are counted N times. However, this approach for determining the CSI-RS resources/ports occupation may not be suitable for Rel-16 systems. For example, as noted, Rel-16 may support a Type II codebook, where the PMI granularity (e.g., PMI FD unit (subband) size) is finer than the CQI granularity (e.g., CQI FD unit (subband) size). In these scenarios, the finer CSI granularity may lead to a much larger CSI computational complexity that is larger than the UE supported processing capability. Accordingly, it may be desirable to provide a new rule for determining the CSI-RS resources/ports occupation that can be used for determining the CSI reporting setting(s) subject to the UE capabilities.

In some aspects, the new rule may apply in situations where a particular codebook (e.g., Rel-16 Type II codebook) is employed. For example, the gNB may use the new rule to determine the CSI-RS resources/ports occupation of each CSI report, and may generate (or determine) a CSI reporting configuration having one or more CSI reports, where the CSI-RS resources/ports occupation in each CSI report is subject to the UE reported capability. Similarly, the UE may report its capabilities (of maximum supported CSI-RS resources/ports) in order to impact the gNB scheduling (e.g., restrict the size of the CSI reporting configuration). The UE may also determine the CSI-RS resources/ports occupation using the new rule in order to determine whether the received CSI reporting configuration is within the UE capabilities. If, for example, the gNB (accidently or mistakenly) schedules one or more CSI reports beyond the UE's capabilities, the UE can treat the extra CSI reports as errors (e.g., by dropping and/or ignoring the additional CSI report(s)), or treat all CSI reports as errors (e.g., by dropping and/or ignoring all CSI reports).

Note that, as used herein, a CSI-RS resource being referred by N CSI reporting settings may correspond to (1) N configured CSI reporting settings (where all N may not be active, e.g., K out of the N configured CSI reporting settings may be configured and active, and N-K CSI reporting settings may be configured and inactive) or (2) N simultaneously active CSI reporting settings. Further, note that as used herein, a CSI-RS resource and the ports within it being counted N times may correspond to (1) counting as N simultaneous CSI-RS resources/N times P simultaneous ports (where P is the # ports within the CSI-RS resource) or (2) counting as N configured CSI-RS resources/ N times P configured ports (where P is # ports within the CSI-RS resource).

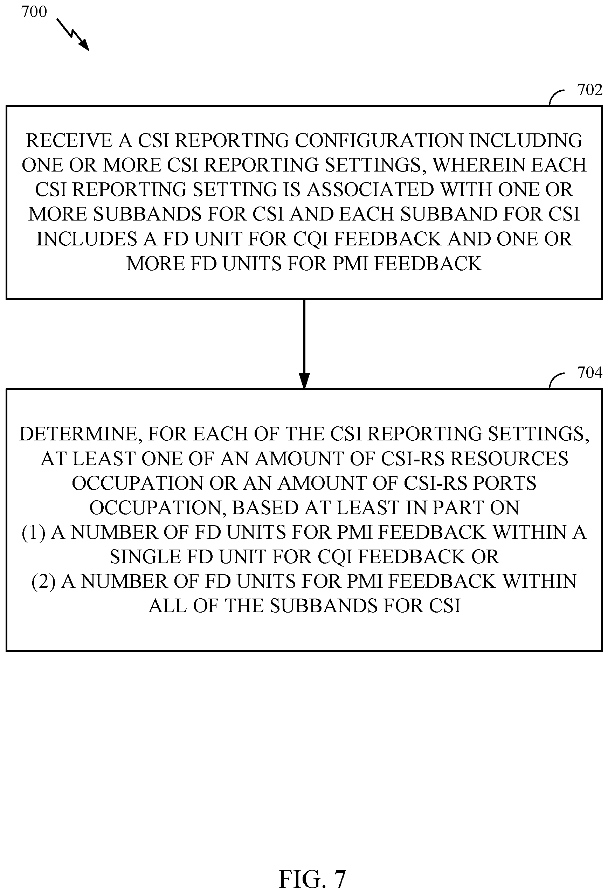

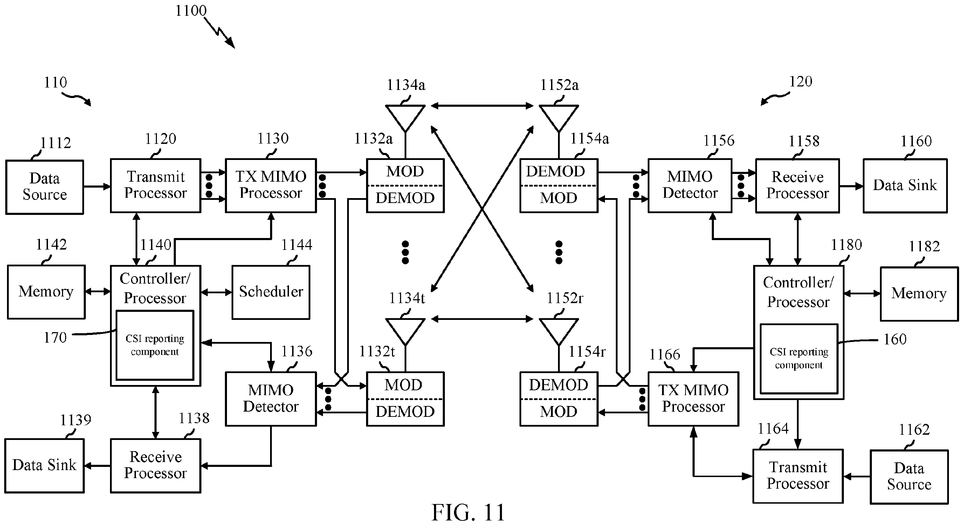

**FIG. 7** is a flow diagram illustrating example operations 700 for wireless communication, in accordance with certain aspects of the present disclosure. The operations 700 may be performed, for example, by UE (e.g., such as a UE 120a in the wireless communication network 100). The operations 700 may be complimentary operations by the UE to the operations 800 performed by the BS. Operations 700 may be implemented as software components that are executed and run on one or more processors (e.g., controller/processor 1180 of **FIG. 11).** Further, the transmission and reception of signals by the UE in operations 700 may be enabled, for example, by one or more antennas (e.g., antennas 1152 of **FIG. 11).** In certain aspects, the transmission and/or reception of signals by the UE may be implemented via a bus interface of one or more processors (e.g., controller/processor 1180) obtaining and/or outputting signals.

The operations 700 may begin, at 702, where the UE receives a CSI reporting configuration that includes one or more CSI reporting settings. Each CSI reporting setting is associated with one or more subbands for CSI. Each subband for CSI includes a FD unit for CQI feedback and one or more FD units for PMI feedback. In some aspects, the CSI reporting configuration may include a CSI request that triggers one or more of the CSI reporting settings. For example, the CSI request may trigger a CSI reporting state, which activates one or more preconfigured CSI reporting settings. In one example, the preconfiguration of the CSI reporting settings may be via RRC signaling. Each CSI reporting setting may include one or more CSI-RS resources, and each CSI-RS resource may include one or more CSI-RS ports.

At 704, the UE determines, for each of the CSI reporting settings, at least one of an amount of CSI-RS resources occupation or an amount of CSI-RS ports occupation, based at least in part on (i) a number of FD units for PMI feedback within a single FD unit for CQI feedback or (ii) a number of FD units for PMI feedback within all of the subbands for CSI. In some aspects, the determination of the amount of CSI-RS resources occupation and/or the amount of CSI-RS ports occupation is further based on a type of codebook associated with the CSI reporting setting. For example, the UE may determine the resources/ports occupation based on (i) or (ii) if the codebook is Rel-16 Type II with FD compression.

The amount of CSI-RS resources occupation and/or the amount of the CSI-RS ports occupation can be based on two types: (1) configured resources (including active and inactive) and (2) active resources. Thus, in some aspects, the amount of CSI-RS resources occupation (e.g., in 704) may include an amount of simultaneous active CSI-RS resources occupation and the amount of CSI-RS ports occupation (e.g., in 704) may include an amount of simultaneous active CSI-RS ports occupation.

In some aspects, the operations 700 may further include the UE sending an indication of a CSI processing capability of the UE. The CSI processing capability may include an indication of at least one of a number of CSI-RS resources supported by the UE or a number of CSI-RS ports supported by the UE. As part of operations 700, the UE may determine at least one of a total amount of CSI-RS resources occupation or a total amount of CSI-RS ports occupation based at least in part on the determined amount of CSI-RS resources occupation of each CSI reporting setting or the determined amount of CSI-RS ports occupation of each CSI reporting setting. As part of operations 700, the UE may perform CSI calculation and reporting of the one or more CSI reporting settings if at least one of the total amount of CSI-RS resource occupation is smaller than the indicated number of CSI-RS resources supported by the UE or the total amount of CSI-RS ports occupation is smaller than the indicated number of CSI-RS ports supported by the UE.

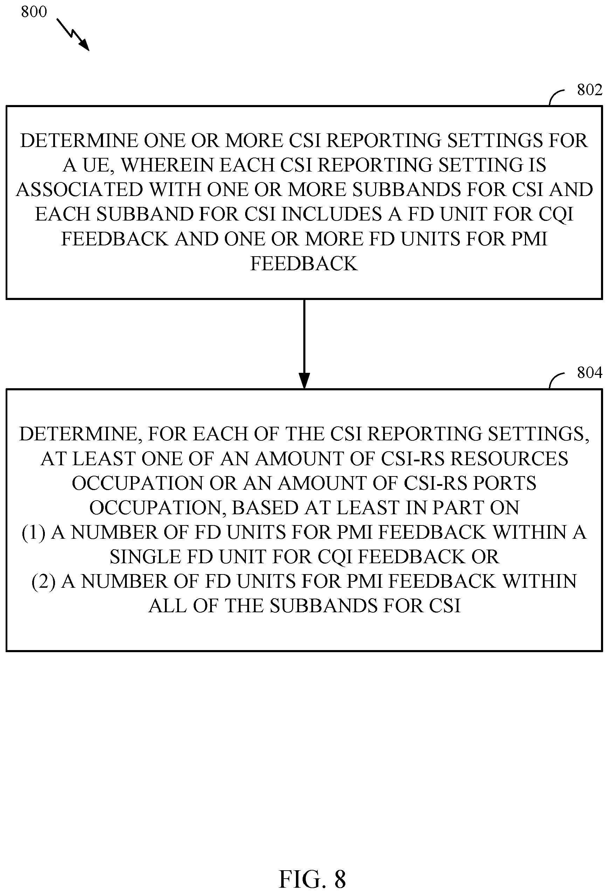

**FIG. 8** is a flow diagram illustrating example operations 800 for wireless communication, in accordance with certain aspects of the present disclosure. The operations 800 may be performed, for example, by a gNB (e.g., such as the BS 110a in the wireless communication network 100). The operations 800 may be complimentary operations by the BS to the operations 700 performed by the UE. Operations 800 may be implemented as software components that are executed and run on one or more processors (e.g., controller/processor 1140 of **FIG. 11**). Further, the transmission and reception of signals by the BS in operations 800 may be enabled, for example, by one or more antennas (e.g., antennas 1134 of **FIG. 11**). In certain aspects, the transmission and/or reception of signals by the BS may be implemented via a bus interface of one or more processors (e.g., controller/processor 1140) obtaining and/or outputting signals.

The operations 800 may begin, at 802, where the gNB determines (e.g., as part of a CSI reporting configuration) one or more CSI reporting settings. Each CSI reporting setting is associated with one or more subbands for CSI. Each subband for CSI includes a FD unit for CQI feedback and one or more FD units for PMI feedback.

At 804, the gNB determines, for each of the CSI reporting settings, at least one of an amount of CSI-RS resources occupation or an amount of CSI-RS ports occupation, based at least in part on (i) a number of FD units for PMI feedback within a single FD unit for CQI feedback or (ii) a number of FD units for PMI feedback within all of the subbands for CSI. In some aspects, the determination of the amount of CSI-RS resources occupation and/or the amount of CSI-RS ports occupation is further based on a type of codebook associated with the CSI reporting setting. For example, the gNB may determine the resources/ports occupation based on (i) or (ii) if the codebook is Rel-16 Type II with FD compression.

The amount of CSI-RS resources occupation and/or the amount of the CSI-RS ports occupation can be based on two types: (1) configured resources (including active and inactive) and (2) active resources. Thus, in some aspects, the amount of CSI-RS resources occupation (e.g., in 804) may include an amount of simultaneous active CSI-RS resources occupation and the amount of CSI-RS ports occupation (e.g., in 804) may include an amount of simultaneous active CSI-RS ports occupation.

In some aspects, the operations 800 may further include the gNB receiving an indication of a CSI processing capability of the UE. The CSI processing capability may include an indication of at least one of a number of CSI-RS resources supported by the UE or a number of CSI-RS ports supported by the UE. As part of operations 800, the gNB may determine at least one of a total amount of CSI-RS resource occupation or a total amount of CSI-RS ports occupation based at least in part on the determined amount of CSI-RS resource occupation of each CSI reporting setting or the determined amount of CSI-RS ports occupation of each CSI reporting setting. As part of operations 800, the gNB may signal a CSI reporting configuration including the one or more CSI reporting settings to the UE if at least one of the total amount of CSI-RS resources occupation is smaller than the indicated number of CSI-RS resources supported by the UE or the total amount of CSI-RS ports occupation is smaller than the indicated number of CSI-RS ports supported by the UE.

In some aspects, the CSI reporting configuration may include a CSI request that triggers one or more of the CSI reporting settings. For example, the CSI request may trigger a CSI reporting state, which activates one or more preconfigured CSI reporting settings. In one example, the preconfiguration of the CSI reporting settings may be via RRC signaling. Each CSI reporting setting may include one or more CSI-RS resources, and each CSI-RS resource may include one or more CSI-RS ports.

In one aspect, the UE (e.g., as part of operations 700) and/or gNB (e.g., as part of operations 800) may determine at least one of the amount of CSI-RS resources occupation or the amount of CSI-RS ports occupation based on the number of the FD units for PMI feedback within a single FD unit for CQI feedback. That is, the UE and/or gNB may determine the resources and ports occupation based on R, where R is the number of PMI FD units in a single CQI band.

In this aspect, the determination of the amount of the CSI-RS resources occupation and/or the amount of CSI-RS ports occupation may include: counting each CSI-RS resource and each CSI-RS port in the CSI-RS resource based on a first number (e.g., $X = A$) if the number of FD units for PMI feedback within a single FD unit for CQI feedback is less than or equal to a threshold number (e.g., $R = 1$); and counting each CSI-RS resource and each CSI-RS port in the CSI-RS resource based on a second number (e.g., $X = B$) if the number of the FD units for PMI feedback within a single FD unit for CQI feedback is greater than the threshold number (e.g., $R = 1$), wherein the second number is greater than one.

In some cases, the threshold number may be configured by the gNB via RRC signaling, media access control (MAC) control element (CE) (MACCE) signaling, or downlink control information (DCI) signaling. In some cases, the threshold number can be predetermined in a standard specification (e.g., 3GPP Rel-16 specification). In some cases, the threshold number can be predetermined following a rule based on one or parameters.

For example, if a CSI-RS resource is referred by a CSI reporting setting associated with Rel-16 Type II, then the CSI-RS resource and the CSI-RS ports within the CSI-RS resource may be counted $X \geq 1$ times, where X may be dependent on R, which is configured by the gNB (e.g., as noted, R is the number of PMI FD units within one CQI subband). For example, in one aspect, X = R. In another aspect, X = A (or a first number) (e.g., if R= 1) and X = B (or a second number) (e.g., if R = 2), where A < B and $A \geq 1$. Thus, in these examples, assuming R =2, then a CSI-RS resource (referred by a CSI reporting setting associated with Rel-16 Type II) and the CSI-RS ports within the CSI-RS resource would be counted (at least) twice.

In general, the above aspect may be stated as the following rule: if a CSI-RS resource is referred by N CSI reporting settings associated with Rel-16 Type II and R = 2, then the CSI-RS resource and the CSI-RS ports within the CSI-RS resource can be counted X*N times, where $X \geq 2$. For example, assume that a CSI-RS resource is referred by N CSI reporting settings, where $N_1$ CSI reporting settings (out of the N CSI reporting settings) are associated with Rel-16 Type II with R = 1, $N_2$ CSI reporting settings (out of the N CSI reporting settings) are associated with Rel-16 Type II with R = 2, and N - $N_1$ - $N_2$ CSI reporting settings are associated with other types of CSI codebooks. Using the above rule with X = 2, in this example, the CSI-RS resource and the CSI-RS ports within the CSI-RS resource would be counted N + $N_2$ times. This result is obtained by counting the resources/ports N - $N_1$ - $N_2$ times (for all other types of CSI codebooks), counting the resources/ports $N_1$ times (for Rel-16 with R = 1), and counting the resources/ports 2*$N_2$ times (for Rel-16 with R = 2), so that (N - $N_1$ - $N_2$) + $N_1$ + ($N_2$ + $N_2$) = N + $N_2$.

In one aspect, the UE (e.g., as part of operations 700) and/or gNB (e.g., as part of operations 800) may determine at least one of the amount of CSI-RS resources occupation or the amount of CSI-RS ports occupation based on the number of the FD units for PMI feedback within all of the subbands for CSI. That is, the UE and/or gNB may determine the resources and ports occupation based on the number of PMI FD units (associated with the configured subbands).

In this aspect, the determination of the amount of the CSI-RS resources occupation and/or the amount of CSI-RS ports occupation may include: counting each CSI-RS resource and each CSI-RS port in the CSI-RS resource based on a first number (e.g., X = A) if the number of the FD units for PMI feedback within all of the subbands for CSI feedback is less than or equal to a threshold number of FD units for PMI feedback; and counting each CSI-RS resource and each CSI-RS port in the CSI-RS resource based on a second number (e.g., X = B) if the number of the FD units for PMI feedback within all of the subbands for CSI feedback is greater than the threshold number of FD units for PMI feedback, wherein the second number is greater than one. In one aspect, the number of the FD units for PMI feedback may be equal to a number of FD units used for reporting CSI with FD compression (e.g., also referred to as $N_3$). In one aspect, the number of the FD units for PMI feedback may be equal to the number of the FD units for CQI feedback times the number of FD units for PMI feedback within each FD unit for CQI feedback (e.g., also referred to as # CQI SB $\times$ R).

In some cases, the threshold number of FD units for PMI feedback may be configured by the gNB via RRC signaling, media access control (MAC) control element (CE) (MACCE) signaling, or downlink control information (DCI) signaling. In some cases, the threshold number of FD units for PMI feedback can be predetermined in a standard specification (e.g., 3GPP Rel-16 specification). In some cases, the threshold number of FD units for PMI feedback can be predetermined following a rule based on one or parameters.

In one example, if a CSI-RS resource is referred by a CSI reporting setting associated with Rel-16 Type II, then the CSI-RS resource and the CSI-RS ports within the CSI-RS resource may be counted $X \geq 1$ times, where X may be dependent on the # PMI units, which is configured by the gNB (e.g., as noted, # PMI FD units is associated with the number of configured subbands). For example, in one aspect, X = A (or a first number) (e.g., if # PMI units $\leq$ threshold) and X = B (or a second number) (e.g., if # PMI units > threshold), where A < B and $A \geq 1$. In one particular example, A = 1 and B = 2. In one particular example, the threshold may be equal to 19 (e.g., same as the maximum number of subbands in Rel-15). In this aspect, assuming the # PMI units > 19, then a CSI-RS resource (referred by a CSI reporting setting associated with Rel-16 Type II) and the CSI-RS ports within the CSI-RS resource would be counted (at least) twice.

In general, the above aspect may be stated as the following rule: if a CSI-RS resource is referred by N CSI reporting settings associated with Rel-16 Type II and the # PMI units > threshold, then the CSI-RS resource and the CSI-RS ports within the CSI-RS resource can be counted X*N times, where $X \geq 2$. For example, assume that a CSI-RS resource is referred by N CSI reporting settings, where $N_1$ CSI reporting settings (out of the N CSI reporting settings) are associated with Rel-16 Type II with # PMI units $\leq$ threshold, $N_2$ CSI reporting settings (out of the N CSI reporting settings) are associated with Rel-16 Type II with # PMI units > threshold, and N - $N_1$ - $N_2$ CSI reporting settings are associated with other types of CSI codebooks. Using the above rule with X = 2, in this example, the CSI-RS resource and the CSI-RS ports within the CSI-RS resource would be counted N + $N_2$ times. This result is obtained by counting the resources/ports N - $N_1$ - $N_2$ times (for all other types of CSI codebooks), counting the resources/ports $N_1$ times (for Rel-16 with # PMI units $\leq$ threshold), and counting the resources/ports 2*$N_2$ times (for Rel-16 with # PMI units > threshold), so that (N - $N_1$ - $N_2$) + $N_1$ + ($N_2$ + $N_2$) = N + $N_2$.

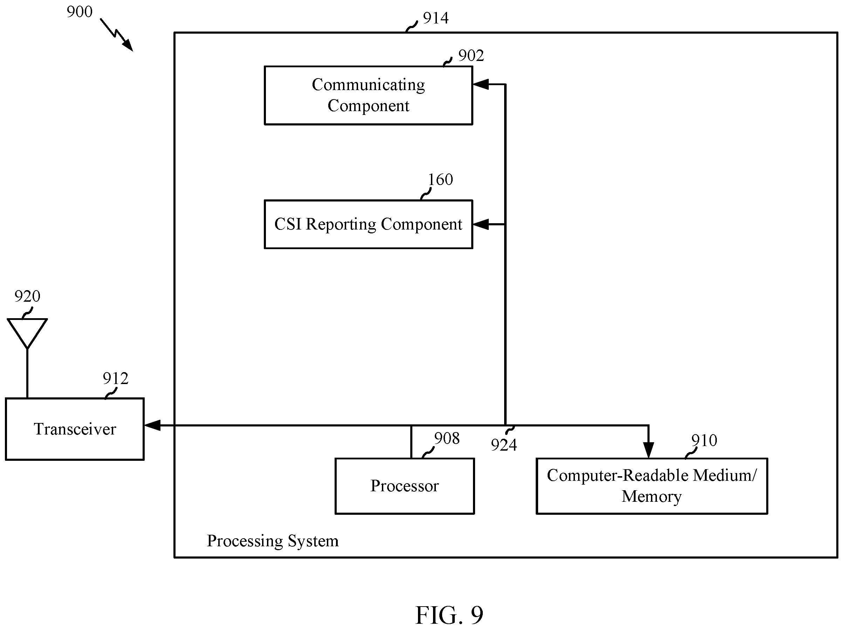

FIG. 9 illustrates a communications device 900 that may include various components (e.g., corresponding to means-plus-function components) configured to perform operations for the techniques disclosed herein, such as the operations illustrated in **FIG. 7.** The communications device 900 includes a processing system 914 coupled to a transceiver 912. The transceiver 912 is configured to transmit and receive signals for the communications device 900 via an antenna 920, such as the various signals described herein. The processing system 914 may be configured to perform processing functions for the communications device 900, including processing signals received and/or to be transmitted by the communications device 900.

The processing system 914 includes a processor 908 coupled to a computer-readable medium/memory 910 via a bus 924. In certain aspects, the computer-readable medium/memory 910 is configured to store instructions that when executed by processor 908, cause the processor 908 to perform the operations illustrated in **FIG. 7** and/or other operations for performing the various techniques discussed herein.

In certain aspects, the processing system 914 further includes a communicating component 902 for performing the operations illustrated at 702 in **FIG. 7** and/or other communication operations described herein. Additionally, the processing system 914 includes a CSI reporting component 160 for performing the operations illustrated at 704 in **FIG. 7** and/or operations described herein. The communicating component 902 and CSI reporting component 160 may be coupled to the processor 908 via bus 924. In certain aspects, the communicating component 902 and CSI reporting component 160 may be hardware circuits. In certain aspects, the communicating component 902 and CSI reporting component 160 may be software components that are executed and run on processor 908.

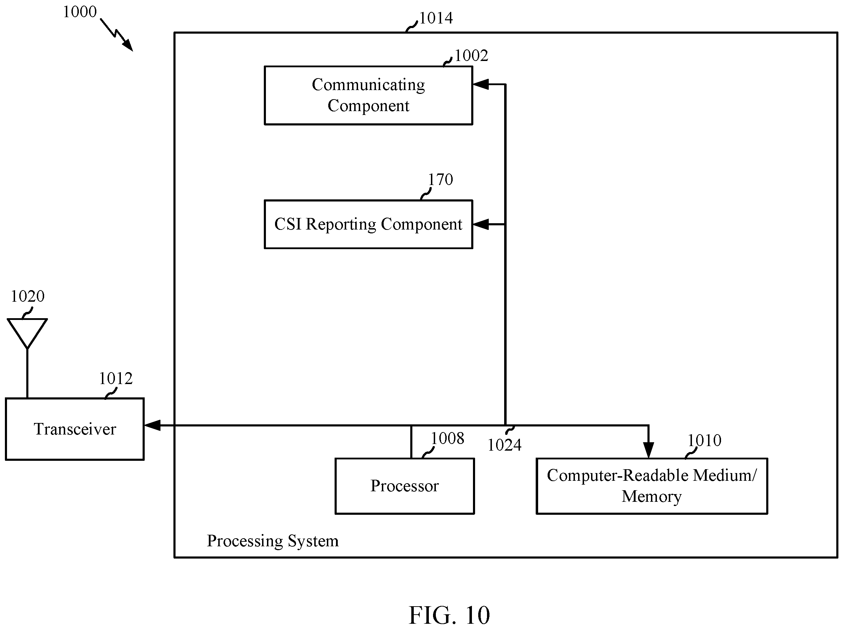

**FIG. 10** illustrates a communications device 1000 that may include various components (e.g., corresponding to means-plus-function components) configured to perform operations for the techniques disclosed herein, such as the operations illustrated in **FIG. 8.** The communications device 1000 includes a processing system 1014 coupled to a transceiver 1012. The transceiver 1012 is configured to transmit and receive signals for the communications device 1000 via an antenna 1020, such as the various signals described herein. The processing system 1014 may be configured to perform processing functions for the communications device 1000, including processing signals received and/or to be transmitted by the communications device 1000.

The processing system 1014 includes a processor 1008 coupled to a computer-readable medium/memory 1010 via a bus 1024. In certain aspects, the computer-readable medium/memory 1010 is configured to store instructions that when executed by processor 1008, cause the processor 1008 to perform the operations illustrated in **FIG. 8** and/or other operations for performing the various techniques discussed herein.

In certain aspects, the processing system 1014 further includes a communicating component 1002 for performing the communication operations described herein. Additionally, the processing system 1014 includes a CSI reporting component 170 for performing the operations illustrated at 802 and 804 in **FIG. 8** and/or operations described herein. The communicating component 1002 and CSI reporting component 170 may be coupled to the processor 1008 via bus 1024. In certain aspects, the communicating component 1002 and CSI reporting component 170 may be hardware circuits. In certain aspects, the communicating component 1002 and CSI reporting component 170 may be software components that are executed and run on processor 1008.

The techniques described herein may be used for various wireless communication technologies, such as NR (e.g., 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

The techniques described herein may be used for the wireless networks and radio technologies mentioned above as well as other wireless networks and radio technologies. For clarity, while aspects may be described herein using terminology commonly associated with 3G, 4G, and/or 5G wireless technologies, aspects of the present disclosure can be applied in other generation-based communication systems.

In 3GPP, the term "cell" can refer to a coverage area of a Node B (NB) and/or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, which may be narrowband IoT (NB-IoT) devices.

**FIG. 11** illustrates example components of BS 110a and UE 120a (e.g., in the wireless communication network 100 of **FIG. 1),** which may be used to implement aspects of the present disclosure.

At the BS 110a, a transmit processor 1120 may receive data from a data source 1112 and control information from a controller/processor 1140. The control information may be for the physical broadcast channel (PBCH), physical control format indicator channel (PCFICH), physical hybrid ARQ indicator channel (PHICH), PDCCH, group common PDCCH (GC PDCCH), etc. The data may be for the PDSCH, etc. The processor 1120 may process (e.g., encode and symbol map) the data and control information to obtain data symbols and control symbols, respectively. The transmit processor 1120 may also generate reference symbols, such as for the primary synchronization signal (PSS), secondary synchronization signal (SSS), and cell-specific reference signal (CRS). A transmit (TX) multiple-input multiple-output (MIMO) processor 1130 may perform spatial processing (e.g., precoding) on the data symbols, the control symbols, and/or the reference symbols, if applicable, and may provide output symbol streams to the modulators (MODs) 1132a-1132t. Each modulator 1132 may process a respective output symbol stream (e.g., for OFDM, etc.) to obtain an output sample stream. Each modulator may further process (e.g., convert to analog, amplify, filter, and upconvert) the output sample stream to obtain a downlink signal. Downlink signals from modulators 1132a- 1132t may be transmitted via the antennas 1134a-1134t, respectively.

At the UE 120a, the antennas 1152a- 1152r may receive the downlink signals from the BS 110a and may provide received signals to the demodulators (DEMODs) in transceivers 1154a- 1154r, respectively. Each demodulator 1154 may condition (e.g., filter, amplify, downconvert, and digitize) a respective received signal to obtain input samples. Each demodulator may further process the input samples (e.g., for OFDM, etc.) to obtain received symbols. A MIMO detector 1156 may obtain received symbols from all the demodulators 1154a- 1154r, perform MIMO detection on the received symbols if applicable, and provide detected symbols. A receive processor 1158 may process (e.g., demodulate, deinterleave, and decode) the detected symbols, provide decoded data for the UE 120a to a data sink 1160, and provide decoded control information to a controller/processor 1180.

On the uplink, at UE 120a, a transmit processor 1164 may receive and process data (e.g., for the physical uplink shared channel (PUSCH)) from a data source 1162 and control information (e.g., for the physical uplink control channel (PUCCH) from the controller/processor 1180. The transmit processor 1164 may also generate reference symbols for a reference signal (e.g., for the sounding reference signal (SRS)). The symbols from the transmit processor 1164 may be precoded by a TX MIMO processor 1166 if applicable, further processed by the demodulators in transceivers 1154a- 1154r (e.g., for SC-FDM, etc.), and transmitted to the BS 110a. At the BS 110a, the uplink signals from the UE 120a may be received by the antennas 1134, processed by the modulators 1132, detected by a MIMO detector 1136 if applicable, and further processed by a receive processor 1138 to obtain decoded data and control information sent by the UE 120a. The receive processor 1138 may provide the decoded data to a data sink 1139 and the decoded control information to the controller/processor 1140.

The memories 1142 and 1182 may store data and program codes for BS 110a and UE 120a, respectively. A scheduler 1144 may schedule UEs for data transmission on the downlink and/or uplink.

The controller/processor 1180 and/or other processors and modules at the UE 120a may perform or direct the execution of processes for the techniques described herein. For example, as shown in **FIG. 11,** the controller/processor 1180 of the UE 120a has a CSI reporting component 160, which is configured to implement one or more techniques described herein for determining CSI-RS resources/ports occupation, according to aspects described herein. Similarly, controller/processor 1140 and/or other processors and modules at the BS 110a may perform or direct the execution of processes for the techniques described herein. For example, as shown in **FIG. 11,** the controller/processor 1140 of the BS 110a has a CSI reporting component 170, which is configured to implement one or more techniques described herein for determining CSI-RS resources/ports occupation, according to aspects described herein. Although shown at the Controller/Processor, other components of the UE 120a and BS 110a may be used performing the operations described herein.

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block" (RB)) may be 12 subcarriers (or 180 kHz). Consequently, the nominal Fast Fourier Transfer (FFT) size may be equal to 128, 256, 512, 1024 or 2048 for system bandwidth of 1.25, 2.5, 5, 10, or 20 megahertz (MHz), respectively. The system bandwidth may also be partitioned into subbands. For example, a subband may cover 1.08 MHz (e.g., 6 RBs), and there may be 1, 2, 4, 8, or 16 subbands for system bandwidth of 1.25, 2.5, 5, 10 or 20 MHz, respectively. In LTE, the basic transmission time interval (TTI) or packet duration is the 1 ms subframe.

NR may utilize OFDM with a CP on the uplink and downlink and include support for half-duplex operation using TDD. In NR, a subframe is still 1 ms, but the basic TTI is referred to as a slot. A subframe contains a variable number of slots (e.g., 1, 2, 4, 8, 16, ... slots) depending on the subcarrier spacing. The NR RB is 12 consecutive frequency subcarriers. NR may support a base subcarrier spacing of 15 KHz and other subcarrier spacing may be defined with respect to the base subcarrier spacing, for example, 30 kHz, 60 kHz, 120 kHz, 240 kHz, etc. The symbol and slot lengths scale with the subcarrier spacing. The CP length also depends on the subcarrier spacing. Beamforming may be supported and beam direction may be dynamically configured. MIMO transmissions with precoding may also be supported. In some examples, MIMO configurations in the DL may support up to 8 transmit antennas with multi-layer DL transmissions up to 8 streams and up to 2 streams per UE. In some examples, multi-layer transmissions with up to 2 streams per UE may be supported. Aggregation of multiple cells may be supported with up to 8 serving cells.

In some examples, access to the air interface may be scheduled. A scheduling entity (e.g., a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

In some examples, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see **FIG. 1),** a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein, for example, instructions for performing the operations described herein and illustrated in **FIG. 7** and/or **FIG. 8**.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

**Claims**

1. A method for wireless communication by a user equipment, UE, comprising:

    receiving (702) a channel state information, CSI, reporting configuration comprising one or more CSI reporting settings, wherein each CSI reporting setting is associated with one or more subbands for CSI and each subband for CSI comprises a frequency domain, FD, unit for channel quality information, CQI, feedback and one or more FD units for precoding matrix indicator, PMI, feedback; and
    determining (704), for each of the CSI reporting settings, at least one of an amount of CSI reference signal, CSI-RS, resources occupation or an amount of CSI-RS ports occupation, based at least in part on (i) a number of the FD units for PMI feedback within a single FD unit for CQI feedback or (ii) a number of FD units for PMI feedback within all of the subbands for CSI,
    wherein determining at least one of the amount of CSI-RS resource occupation or the amount of CSI-RS ports occupation is further based on a type of codebook associated with the CSI reporting setting; and
    further comprising:
    sending an indication of a CSI processing capability of the UE, the CSI processing capability comprising an indication of at least one of a number of CSI-RS resources supported by the UE or a number of CSI-RS ports supported by the UE.

2. The method of claim 1, further comprising:

    determining at least one of a total amount of CSI-RS resource occupation or a total amount of CSI-RS ports occupation based at least in part on the determined amount of CSI-RS resource occupation of each CSI reporting setting or the determined amount of CSI-RS ports occupation of each CSI reporting setting; and
    performing CSI calculation and reporting of the one or more CSI reporting settings if at least one of the total amount of CSI-RS resource occupation is smaller than the indicated number of CSI-RS resources supported by the UE or the total amount of CSI-RS ports occupation is smaller than the indicated number of CSI-RS ports supported by the UE.

3. The method of claim 1, wherein determining at least one of the amount of CSI-RS resources occupation or the amount of CSI-RS ports occupation is based on the number of the FD units for PMI feedback within a single FD unit for CQI feedback.

4. The method of claim 1, wherein determining at least one of the amount of CSI-RS resource occupation or the amount of CSI-RS ports occupation is based on the number of the FD units for PMI feedback within all of the subbands for CSI.

5. The method of claim 4, wherein determining at least one of the amount of CSI-RS resource occupation or the amount of CSI-RS ports occupation further comprises:

   counting each CSI-RS resource and each CSI-RS port in the CSI-RS resource based on a first number if the number of the FD units for PMI feedback within all of the subbands for CSI feedback is less than or equal to a threshold number of FD units for PMI feedback; and
   counting each CSI-RS resource and each CSI-RS port in the CSI-RS resource based on a second number if the number of the FD units for PMI feedback within all of the subbands for CSI feedback is greater than the threshold number of FD units for PMI feedback, wherein the second number is greater than one.

6. A method for wireless communication by a network entity, comprising:

   determining (802) one or more channel state information, CSI, reporting settings for a user equipment, UE, wherein each CSI reporting setting is associated with one or more subbands for CSI and each subband for CSI comprises a frequency domain, FD, unit for channel quality information, CQI, feedback and one or more FD units for precoding matrix indicator, PMI, feedback; and
   determining (804), for each of the CSI reporting settings, at least one of an amount of CSI reference signal, CSI-RS, resources occupation or an amount of CSI-RS ports occupation, based at least in part on (i) a number of the FD units for PMI feedback within a single FD unit for CQI feedback or (ii) a number of FD units for PMI feedback within all of the subbands for CSI,
   wherein determining at least one of the amount of CSI-RS resource occupation or the amount of CSI-RS ports occupation is further based on a type of codebook associated with the CSI reporting setting; and further comprising:
   receiving an indication of a CSI processing capability of the UE, the CSI processing capability comprising an indication of at least one of a number of CSI-RS resources supported by the UE or a number of CSI-RS ports supported by the UE.

7. The method of claim 6, further comprising:

   determining at least one of a total amount of CSI-RS resource occupation or a total amount of CSI-RS ports occupation based at least in part on the determined amount of CSI-RS resource occupation of each CSI reporting setting or the determined amount of CSI-RS ports occupation of each CSI reporting setting; and
   signaling a CSI reporting configuration comprising the one or more CSI reporting settings to the UE if at least one of the total amount of CSI-RS resources occupation is smaller than the indicated number of CSI-RS resources supported by the UE or the total amount of CSI-RS ports occupation is smaller than the indicated number of CSI-RS ports supported by the UE.

8. The method of claim 6, wherein determining at least one of the amount of CSI-RS resources occupation or the amount of CSI-RS ports occupation is based on the number of the FD units for PMI feedback within a single FD unit for CQI feedback.

9. The method of claim 6, wherein determining at least one of the amount of CSI-RS resource occupation or the amount of CSI-RS ports occupation is based on the number of the FD units for PMI feedback within all of the subbands for CSI.

10. The method of claim 9, wherein determining at least one of the amount of CSI-RS resource occupation or the amount of CSI-RS ports occupation further comprises:

   counting each CSI-RS resource and each CSI-RS port in the CSI-RS resource based on a first number if the number of the FD units for PMI feedback within all of the subbands for CSI feedback is less than or equal to a threshold number of FD units for PMI feedback; and
   counting each CSI-RS resource and each CSI-RS port in the CSI-RS resource based on a second number if the number of the FD units for PMI feedback within all of the subbands for CSI feedback is greater than the threshold number of FD units for PMI feedback, wherein the second number is greater than one.

11. A computer-program comprising instructions which, when executed by a processor of a user equipment, cause the user equipment to carry out the method of any of claims 1 to 5, or, which, when executed by a processor of a base station, cause the base station to carry out the method of any of claims 6 to 10.

12. An apparatus for wireless communication at a user equipment, UE, the apparatus comprising:

means for receiving a channel state information, CSI, reporting configuration comprising one or more CSI reporting settings, wherein each CSI reporting setting is associated with one or more subbands for CSI and each subband for CSI comprises a frequency domain, FD, unit for channel quality information, CQI, feedback and one or more FD units for precoding matrix indicator, PMI, feedback; and
means for determining, for each of the CSI reporting settings, at least one of an amount of CSI reference signal, CSI-RS, resources occupation or an amount of CSI-RS ports occupation, based at least in part on (i) a number of the FD units for PMI feedback within a single FD unit for CQI feedback or (ii) a number of FD units for PMI feedback within all of the subbands for CSI,
wherein means for determining at least one of the amount of CSI-RS resource occupation or the amount of CSI-RS ports occupation is further based on a type of codebook associated with the CSI reporting setting; and further comprising:
means for sending an indication of a CSI processing capability of the UE, the CSI processing capability comprising an indication of at least one of a number of CSI-RS resources supported by the UE or a number of CSI-RS ports supported by the UE.

13. The apparatus for wireless communication according to claim 12, further comprising means for carrying out the method of any of claims 2 to 5.

14. An apparatus for wireless communication at a base station, BS, the apparatus comprising:

means for determining one or more channel state information, CSI, reporting settings for a user equipment, UE, wherein each CSI reporting setting is associated with one or more subbands for CSI and each subband for CSI comprises a frequency domain, FD, unit for channel quality information, CQI, feedback and one or more FD units for precoding matrix indicator, PMI, feedback; and
means for determining, for each of the CSI reporting settings, at least one of an amount of CSI reference signal, CSI-RS, resources occupation or an amount of CSI-RS ports occupation, based at least in part on (i) a number of the FD units for PMI feedback within a single FD unit for CQI feedback or (ii) a number of FD units for PMI feedback within all of the subbands for CSI,
wherein determining at least one of the amount of CSI-RS resource occupation or the amount of CSI-RS ports occupation is further based on a type of codebook associated with the CSI reporting setting; and further comprising:
means for receiving an indication of a CSI processing capability of the UE, the CSI processing capability comprising an indication of at least one of a number of CSI-RS resources supported by the UE or a number of CSI-RS ports supported by the UE.

15. The apparatus for wireless communication according to claim 14, further comprising means for carrying out the method of any of claims 7 to 10.

**Patentansprüche**

1. Verfahren zur drahtlosen Kommunikation durch ein Benutzergerät, UE, umfassend:

Empfangen (702) einer Kanalzustandsinformations-, CSI-, Berichtskonfiguration, die eine oder mehrere CSI-Berichtseinstellungen umfasst, wobei jede CSI-Berichtseinstellung mit einem oder mehreren Teilbändern für CSI assoziiert ist und jedes Teilband für CSI eine Frequenzbereichs-, FD-, Einheit für Kanalqualitätsinformations-, CQI-, Rückmeldung und eine oder mehrere FD-Einheiten für Vorcodierungsmatrixindikator-, PMI-, Rückmeldung umfasst; und
Bestimmen (704), für jede der CSI-Berichtseinstellungen, zumindest eines aus einer Menge von CSI-Referenzsignal-, CSI-RS-, Ressourcenbelegung oder einer Menge von CSI-RS-Portbelegung, basierend zumindest teilweise auf (i) einer Anzahl der FD-Einheiten für PMI-Rückmeldung innerhalb einer einzelnen FD-Einheit für CQI-Rückmeldung oder (ii) einer Anzahl von FD-Einheiten für PMI-Rückmeldung innerhalb aller der Teilbänder für CSI,

wobei das Bestimmen zumindest eines aus der Menge von CSI-RS-Ressourcenbelegung oder der Menge von CSI-RS-Portbelegung weiterhin auf einem Typ eines Codebuchs basiert, der mit der CSI-Berichtseinstellung assoziiert ist; und

weiterhin umfassend:

Senden einer Angabe einer CSI-Verarbeitungsfähigkeit des UE, wobei die CSI-Verarbeitungsfähigkeit eine Angabe zumindest eines aus einer Anzahl von CSI-RS-Ressourcen, die durch das UE unterstützt werden, oder einer Anzahl von CSI-RS-Ports, die durch das UE unterstützt werden, umfasst.

2. Verfahren gemäß Anspruch 1, weiterhin umfassend:

Bestimmen zumindest eines aus einer Gesamtmenge von CSI-RS-Ressourcenbelegung oder einer Gesamtmenge von CSI-RS-Portbelegung basierend zumindest teilweise auf der bestimmten Menge von CSI-RS-Ressourcenbelegung jeder CSI-Berichtseinstellung oder der bestimmten Menge von CSI-RS-Portbelegung jeder CSI-Berichtseinstellung; und

Ausführen von CSI-Berechnung und Berichten der einen oder mehreren CSI-Berichtseinstellungen, wenn zumindest eines aus der Gesamtmenge von CSI-RS-Ressourcenbelegung kleiner als die angegebene Anzahl von CSI-RS-Ressourcen ist, die durch das UE unterstützt werden, oder die Gesamtmenge von CSI-RS-Portbelegung kleiner als die angegebene Anzahl von CSI-RS-Ports ist, die durch das UE unterstützt werden.

3. Verfahren gemäß Anspruch 1, wobei das Bestimmen zumindest eines aus der Menge von CSI-RS-Ressourcenbelegung oder der Menge von CSI-RS-Portbelegung auf der Anzahl der FD-Einheiten für PMI-Rückmeldung innerhalb einer einzelnen FD-Einheit für CQI-Rückmeldung basiert.

4. Verfahren gemäß Anspruch 1, wobei das Bestimmen zumindest eines aus der Menge von CSI-RS-Ressourcenbelegung oder der Menge von CSI-RS-Portbelegung auf der Anzahl der FD-Einheiten für PMI-Rückmeldung innerhalb aller der Teilbänder für CSI basiert.

5. Verfahren gemäß Anspruch 4, wobei das Bestimmen zumindest eines aus der Menge von CSI-RS-Ressourcenbelegung oder der Menge von CSI-RS-Portbelegung weiterhin umfasst:

Zählen jeder CSI-RS-Ressource und jedes CSI-RS-Ports in der CSI-RS-Ressource basierend auf einer ersten Anzahl, wenn die Anzahl der FD-Einheiten für PMI-Rückmeldung innerhalb aller der Teilbänder für CSI-Rückmeldung kleiner oder gleich einer Schwellenanzahl von FD-Einheiten für PMI-Rückmeldung ist; und

Zählen jeder CSI-RS-Ressource und jedes CSI-RS-Ports in der CSI-RS-Ressource basierend auf einer zweiten Anzahl, wenn die Anzahl der FD-Einheiten für PMI-Rückmeldung innerhalb aller der Teilbänder für CSI-Rückmeldung größer als die Schwellenanzahl von FD-Einheiten für PMI-Rückmeldung ist, wobei die zweite Anzahl größer als eins ist.

6. Verfahren zur drahtlosen Kommunikation durch eine Netzwerkeinheit, umfassend:

Bestimmen (802) einer oder mehrerer Kanalzustandsinformations-, CSI-, Berichtseinstellungen für ein Benutzergerät, UE, wobei jede CSI-Berichtseinstellung mit einem oder mehreren Teilbändern für CSI assoziiert ist und jedes Teilband für CSI eine Frequenzbereichs-, FD-, Einheit für Kanalqualitätsinformations-, CQI-, Rückmeldung und eine oder mehrere FD-Einheiten für Vorcodierungsmatrixindikator-, PMI-, Rückmeldung umfasst; und

Bestimmen (804), für jede der CSI-Berichtseinstellungen, zumindest eines aus einer Menge von CSI-Referenzsignal-, CSI-RS-, Ressourcenbelegung oder einer Menge von CSI-RS-Portbelegung, basierend zumindest teilweise auf (i) einer Anzahl der FD-Einheiten für PMI-Rückmeldung innerhalb einer einzelnen FD-Einheit für CQI-Rückmeldung oder (ii) einer Anzahl von FD-Einheiten für PMI-Rückmeldung innerhalb aller der Teilbänder für CSI,

wobei das Bestimmen zumindest eines aus der Menge von CSI-RS-Ressourcenbelegung oder der Menge von CSI-RS-Portbelegung weiterhin auf einem Typ eines Codebuchs basiert, der mit der CSI-Berichtseinstellung assoziiert ist; und

weiterhin umfassend:

Empfangen einer Angabe einer CSI-Verarbeitungsfähigkeit des UE, wobei die CSI-Verarbeitungsfähigkeit eine Angabe zumindest eines aus einer Anzahl von CSI-RS-Ressourcen, die durch das UE unterstützt werden, oder einer Anzahl von CSI-RS-Ports, die durch das UE unterstützt werden, umfasst.

7. Verfahren gemäß Anspruch 6, weiterhin umfassend:

Bestimmen zumindest eines aus einer Gesamtmenge von CSI-RS-Ressourcenbelegung oder einer Gesamtmenge von CSI-RS-Portbelegung basierend zumindest teilweise auf der bestimmten Menge von CSI-RS-Ressourcenbelegung jeder CSI-Berichtseinstellung oder der bestimmten Menge von CSI-RS-Portbelegung jeder CSI-Berichtseinstellung; und
Signalisieren einer CSI-Berichtskonfiguration, die die eine oder mehreren CSI-Berichtseinstellungen umfasst, an das UE, wenn zumindest eines aus der Gesamtmenge von CSI-RS-Ressourcenbelegung kleiner als die angegebene Anzahl von CSI-RS-Ressourcen ist, die durch das UE unterstützt werden, oder die Gesamtmenge von CSI-RS-Portbelegung kleiner als die angegebene Anzahl von CSI-RS-Ports ist, die durch das UE unterstützt werden.

8. Verfahren gemäß Anspruch 6, wobei das Bestimmen zumindest eines aus der Menge von CSI-RS-Ressourcenbelegung oder der Menge von CSI-RS-Portbelegung auf der Anzahl der FD-Einheiten für PMI-Rückmeldung innerhalb einer einzelnen FD-Einheit für CQI-Rückmeldung basiert.

9. Verfahren gemäß Anspruch 6, wobei das Bestimmen zumindest eines aus der Menge von CSI-RS-Ressourcenbelegung oder der Menge von CSI-RS-Portbelegung auf der Anzahl der FD-Einheiten für PMI-Rückmeldung innerhalb aller der Teilbänder für CSI basiert.

10. Verfahren gemäß Anspruch 9, wobei das Bestimmen zumindest eines aus der Menge von CSI-RS-Ressourcenbelegung oder der Menge von CSI-RS-Portbelegung weiterhin umfasst:

Zählen jeder CSI-RS-Ressource und jedes CSI-RS-Ports in der CSI-RS-Ressource basierend auf einer ersten Anzahl, wenn die Anzahl der FD-Einheiten für PMI-Rückmeldung innerhalb aller der Teilbänder für CSI-Rückmeldung kleiner oder gleich einer Schwellenanzahl von FD-Einheiten für PMI-Rückmeldung ist; und
Zählen jeder CSI-RS-Ressource und jedes CSI-RS-Ports in der CSI-RS-Ressource basierend auf einer zweiten Anzahl, wenn die Anzahl der FD-Einheiten für PMI-Rückmeldung innerhalb aller der Teilbänder für CSI-Rückmeldung größer als die Schwellenanzahl von FD-Einheiten für PMI-Rückmeldung ist, wobei die zweite Anzahl größer als eins ist.

11. Computerprogramm, umfassend Anweisungen, die, wenn sie durch einen Prozessor eines Benutzergeräts ausgeführt werden, das Benutzergerät veranlassen, das Verfahren gemäß einem der Ansprüche 1 bis 5 auszuführen, oder die, wenn sie durch einen Prozessor einer Basisstation ausgeführt werden, die Basisstation veranlassen, das Verfahren gemäß einem der Ansprüche 6 bis 10 auszuführen.

12. Vorrichtung zur drahtlosen Kommunikation an einem Benutzergerät, UE, wobei die Vorrichtung umfasst:

Mittel zum Empfangen einer Kanalzustandsinformations-, CSI-, Berichtskonfiguration, die eine oder mehrere CSI-Berichtseinstellungen umfasst, wobei jede CSI-Berichtseinstellung mit einem oder mehreren Teilbändern für CSI assoziiert ist und jedes Teilband für CSI eine Frequenzbereichs-, FD-, Einheit für Kanalqualitätsinformations-, CQI-, Rückmeldung und eine oder mehrere FD-Einheiten für Vorcodierungsmatrixindikator-, PMI-, Rückmeldung umfasst; und
Mittel zum Bestimmen, für jede der CSI-Berichtseinstellungen, zumindest eines aus einer Menge von CSI-Referenzsignal-, CSI-RS-, Ressourcenbelegung oder einer Menge von CSI-RS-Portbelegung, basierend zumindest teilweise auf (i) einer Anzahl der FD-Einheiten für PMI-Rückmeldung innerhalb einer einzelnen FD-Einheit für CQI-Rückmeldung oder (ii) einer Anzahl von FD-Einheiten für PMI-Rückmeldung innerhalb aller der Teilbänder für CSI,
wobei das Mittel zum Bestimmen zumindest eines aus der Menge von CSI-RS-Ressourcenbelegung oder der Menge von CSI-RS-Portbelegung weiterhin auf einem Typ eines Codebuchs basiert, der mit der CSI-Berichtseinstellung assoziiert ist; und
weiterhin umfassend:
Mittel zum Senden einer Angabe einer CSI-Verarbeitungsfähigkeit des UE, wobei die CSI-Verarbeitungsfähigkeit eine Angabe zumindest eines aus einer Anzahl von CSI-RS-Ressourcen, die durch das UE unterstützt werden, oder einer Anzahl von CSI-RS-Ports, die durch das UE unterstützt werden, umfasst.

**13.** Vorrichtung zur drahtlosen Kommunikation gemäß Anspruch 12, weiterhin umfassend Mittel zum Ausführen des Verfahrens gemäß einem der Ansprüche 2 bis 5.

**14.** Vorrichtung zur drahtlosen Kommunikation an einer Basisstation, BS, wobei die Vorrichtung umfasst:

Mittel zum Bestimmen einer oder mehrerer Kanalzustandsinformations-, CSI-, Berichtseinstellungen für ein Benutzergerät, UE, wobei jede CSI-Berichtseinstellung mit einem oder mehreren Teilbändern für CSI assoziiert ist und jedes Teilband für CSI eine Frequenzbereichs-, FD-, Einheit für Kanalqualitätsinformations-, CQI, Rückmeldung und eine oder mehrere FD-Einheiten für Vorcodierungsmatrixindikator-, PMI-, Rückmeldung umfasst; und

Mittel zum Bestimmen, für jede der CSI-Berichtseinstellungen, zumindest eines aus einer Menge von CSI-Referenzsignal-, CSI-RS-, Ressourcenbelegung oder einer Menge von CSI-RS-Portbelegung, basierend zumindest teilweise auf (i) einer Anzahl der FD-Einheiten für PMI-Rückmeldung innerhalb einer einzelnen FD-Einheit für CQI-Rückmeldung oder (ii) einer Anzahl von FD-Einheiten für PMI-Rückmeldung innerhalb aller der Teilbänder für CSI,

wobei das Bestimmen zumindest eines aus der Menge von CSI-RS-Ressourcenbelegung oder der Menge von CSI-RS-Portbelegung weiterhin auf einem Typ eines Codebuchs basiert, der mit der CSI-Berichtseinstellung assoziiert ist; und

weiterhin umfassend:

Mittel zum Empfangen einer Angabe einer CSI-Verarbeitungsfähigkeit des UE, wobei die CSI-Verarbeitungsfähigkeit eine Angabe zumindest eines aus einer Anzahl von CSI-RS-Ressourcen, die durch das UE unterstützt werden, oder einer Anzahl von CSI-RS-Ports, die durch das UE unterstützt werden, umfasst.

**15.** Vorrichtung zur drahtlosen Kommunikation gemäß Anspruch 14, weiterhin umfassend Mittel zum Ausführen des Verfahrens gemäß einem der Ansprüche 7 bis 10.

## Revendications

**1.** Un procédé de communication sans fil par un équipement utilisateur, UE, comprenant :

la réception (702) d'une configuration de rapport d'information d'état de canal, CSI, comprenant un ou plusieurs paramétrages de rapport de CSI, dans lequel chaque paramétrage de rapport de CSI est associé à une ou plusieurs sous-bandes pour CSI et chaque sous-bande pour CSI comprend une unité du domaine fréquentiel, FD, pour un retour d'information de qualité de canal, CQI, et une ou plusieurs unités FD pour un retour d'indicateur de matrices de précodage, PMI ; et

la détermination (704), pour chacun des paramétrages de rapport de CSI, d'au moins une parmi une quantité d'occupation de ressources de signal de référence de CSI, CSI-RS, ou une quantité d'occupation de ports de CSI-RS, sur la base au moins en partie (i) d'un nombre des unités FD pour retour de PMI dans une unique unité FD pour retour de CQI ou (ii) d'un nombre d'unités FD pour retour de PMI dans la totalité des sous-bandes pour CSI,

dans lequel la détermination d'au moins une parmi la quantité d'occupation de ressources de CSI-RS ou la quantité d'occupation de ports de CSI-RS est basée en outre sur un type de livre de code associé au paramétrage de rapport de CSI ; et

comprenant en outre :

l'envoi d'une indication d'une capacité de traitement de CSI de l'UE, la capacité de traitement de CSI comprenant une indication d'au moins un parmi un nombre de ressources de CSI-RS prises en charge par l'UE ou un nombre de ports de CSI-RS pris en charge par l'UE.

**2.** Le procédé selon la revendication 1, comprenant en outre :

la détermination d'au moins une parmi une quantité totale d'occupation de ressources de CSI-RS ou une quantité totale d'occupation de ports de CSI-RS sur la base au moins en partie de la quantité déterminée d'occupation de ressources de CSI-RS de chaque paramétrage de rapport de CSI ou de la quantité déterminée d'occupation de ports de CSI-RS de chaque paramétrage de rapport de CSI ; et

la réalisation d'un calcul de CSI et le rapport des un ou plusieurs paramétrages de rapport de CSI si au moins une parmi la quantité totale d'occupation de ressources de CSI-RS est inférieure au nombre indiqué de ressources de CSI-RS prises en charge par l'UE ou la quantité totale d'occupation de ports de CSI-RS est inférieure au nombre indiqué de ports de CSI-RS pris en charge par l'UE.

**3.** Le procédé selon la revendication 1, dans lequel la détermination d'au moins une parmi la quantité d'occupation de ressources de CSI-RS ou la quantité d'occupation de ports de CSI-RS est basée sur le nombre des unités FD pour retour de PMI dans une unique unité FD pour retour de CQI.

**4.** Le procédé selon la revendication 1, dans lequel la détermination d'au moins une parmi la quantité d'occupation de ressources de CSI-RS ou la quantité d'occupation de ports de CSI-RS est basée sur le nombre des unités FD pour retour de PMI dans la totalité des sous-bandes pour CSI.

**5.** Le procédé selon la revendication 4, dans lequel la détermination d'au moins une parmi la quantité d'occupation de ressources de CSI-RS ou la quantité d'occupation de ports de CSI-RS comprend en outre :

le comptage de chaque ressource de CSI-RS et de chaque port de CSI-RS dans la ressource de CSI-RS sur la base d'un premier nombre si le nombre des unités FD pour retour de PMI dans la totalité des sous-bandes pour retour de CSI est inférieur ou égal à un nombre de seuil pour des unités FD pour retour de PMI ; et
le comptage de chaque ressource de CSI-RS et de chaque port de CSI-RS dans la ressource de CSI-RS sur la base d'un deuxième nombre si le nombre des unités FD pour retour de PMI dans la totalité des sous-bandes pour retour de CSI est supérieur au nombre de seuil pour des unités FD pour retour de PMI, dans lequel le deuxième nombre est supérieur à l'unité.

**6.** Un procédé de communication sans fil par une entité de réseau, comprenant :

la détermination (802) d'un ou plusieurs paramétrages de rapport d'information d'état de canal, CSI, pour un équipement utilisateur, UE, dans lequel chaque paramétrage de rapport de CSI est associé à une ou plusieurs sous-bandes pour CSI et chaque sous-bande pour CSI comprend une unité du domaine fréquentiel, FD, pour un retour d'information de qualité de canal, CQI, et une ou plusieurs unités FD pour un retour d'indicateur de matrices de précodage, PMI ; et
la détermination (804), pour chacun des paramétrages de rapport de CSI, d'au moins une parmi une quantité d'occupation de ressources de signal de référence de CSI, CSI-RS, ou une quantité d'occupation de ports de CSI-RS, sur la base au moins en partie (i) d'un nombre des unités FD pour retour de PMI dans une unique unité FD pour retour de CQI ou (ii) d'un nombre d'unités FD pour retour de PMI dans la totalité des sous-bandes pour CSI,
dans lequel la détermination d'au moins une parmi la quantité d'occupation de ressources de CSI-RS ou la quantité d'occupation de ports de CSI-RS est basée en outre sur un type de livre de code associé au paramétrage de rapport de CSI ; et
comprenant en outre :
la réception d'une indication d'une capacité de traitement de CSI de l'UE, la capacité de traitement de CSI comprenant une indication d'au moins un parmi un nombre de ressources de CSI-RS prises en charge par l'UE ou un nombre de ports de CSI-RS pris en charge par l'UE.

**7.** Le procédé selon la revendication 6, comprenant en outre :

la détermination d'au moins une parmi une quantité totale d'occupation de ressources de CSI-RS ou une quantité totale d'occupation de ports de CSI-RS sur la base au moins en partie de la quantité déterminée d'occupation de ressources de CSI-RS de chaque paramétrage de rapport de CSI ou de la quantité déterminée d'occupation de ports de CSI-RS de chaque paramétrage de rapport de CSI ; et
la signalisation d'une configuration de rapport de CSI comprenant les un ou plusieurs paramétrages de rapport de CSI à l'UE si au moins une parmi la quantité totale d'occupation de ressources de CSI-RS est inférieure au nombre indiqué de ressources de CSI-RS prises en charge par l'UE ou la quantité totale d'occupation de ports de CSI-RS est inférieure au nombre indiqué de ports de CSI-RS pris en charge par l'UE.

**8.** Le procédé selon la revendication 6, dans lequel la détermination d'au moins une parmi la quantité d'occupation de ressources de CSI-RS ou la quantité d'occupation de ports de CSI-RS est basée sur le nombre des unités FD pour retour de PMI dans une unique unité FD pour retour de CQI.

**9.** Le procédé selon la revendication 6, dans lequel la détermination d'au moins une parmi la quantité d'occupation de ressources de CSI-RS ou la quantité d'occupation de ports de CSI-RS est basée sur le nombre des unités FD pour retour de PMI dans la totalité des sous-bandes pour CSI.

10. Le procédé selon la revendication 9, dans lequel la détermination d'au moins une parmi la quantité d'occupation de ressources de CSI-RS ou la quantité d'occupation de ports de CSI-RS comprend en outre :

le comptage de chaque ressource de CSI-RS et de chaque port de CSI-RS dans la ressource de CSI-RS sur la base d'un premier nombre si le nombre des unités FD pour retour de PMI dans la totalité des sous-bandes pour retour de CSI est inférieur ou égal à un nombre de seuil pour des unités FD pour retour de PMI ; et
le comptage de chaque ressource de CSI-RS et de chaque port de CSI-RS dans la ressource de CSI-RS sur la base d'un deuxième nombre si le nombre des unités FD pour retour de PMI dans la totalité des sous-bandes pour retour de CSI est supérieur au nombre de seuil d'unités FD pour retour de PMI, dans lequel le deuxième nombre est supérieur à l'unité.

11. Un programme de calculateur comprenant des instructions qui, quand elles sont exécutées par un processeur d'un équipement utilisateur, amènent l'équipement utilisateur à réaliser le procédé selon l'une des revendications 1 à 5, ou qui, quand elles sont exécutées par un processeur d'une station de base, amènent la station de base à réaliser le procédé selon l'une des revendications 6 à 10.

12. Un appareil pour la communication sans fil au niveau d'un équipement utilisateur, UE, l'appareil comprenant :

un moyen pour recevoir une configuration de rapport d'information d'état de canal, CSI, comprenant un ou plusieurs paramétrages de rapport de CSI, dans lequel chaque paramétrage de rapport de CSI est associé à une ou plusieurs sous-bandes pour CSI et chaque sous-bande pour CSI comprend une unité du domaine fréquentiel, FD, pour un retour d'information de qualité de canal, CQI, et une ou plusieurs unités FD pour un retour d'indicateur de matrices de précodage, PMI ; et
un moyen pour déterminer, pour chacun des paramétrages de rapport de CSI, au moins une parmi une quantité d'occupation de ressources de signal de référence de CSI, CSI-RS, ou une quantité d'occupation de ports de CSI-RS, sur la base au moins en partie (i) d'un nombre des unités FD pour retour de PMI dans une unique unité FD pour retour de CQI ou (ii) d'un nombre d'unités FD pour retour de PMI dans la totalité des sous-bandes pour CSI,
dans lequel le moyen pour déterminer au moins une parmi la quantité d'occupation de ressources de CSI-RS ou la quantité d'occupation de ports de CSI-RS est basé en outre sur un type de livre de code associé au paramétrage de rapport de CSI ; et
comprenant en outre :
un moyen pour envoyer une indication d'une capacité de traitement de CSI de l'UE, la capacité de traitement de CSI comprenant une indication d'au moins un parmi un nombre de ressources de CSI-RS prises en charge par l'UE ou un nombre de ports de CSI-RS pris en charge par l'UE.

13. L'appareil pour la communication sans fil selon la revendication 12, comprenant en outre des moyens pour réaliser le procédé selon l'une des revendications 2 à 5.

14. Un appareil pour la communication sans fil au niveau d'une station de base, BS, l'appareil comprenant :

un moyen pour déterminer un ou plusieurs paramétrages de rapport d'information d'état de canal, CSI, pour un équipement utilisateur, UE, dans lequel chaque paramétrage de rapport de CSI est associé à une ou plusieurs sous-bandes pour CSI et chaque sous-bande pour CSI comprend une unité du domaine fréquentiel, FD, pour un retour d'information de qualité de canal, CQI, et une ou plusieurs unités FD pour un retour d'indicateur de matrices de précodage, PMI ; et
un moyen pour déterminer, pour chacun des paramétrages de rapport de CSI, au moins une parmi une quantité d'occupation de ressources de signal de référence de CSI, CSI-RS, ou une quantité d'occupation de ports de CSI-RS, sur la base au moins en partie (i) d'un nombre des unités FD pour retour de PMI dans une unique unité FD pour retour de CQI ou (ii) d'un nombre d'unités FD pour retour de PMI dans la totalité des sous-bandes pour CSI,
dans lequel la détermination d'au moins une parmi la quantité d'occupation de ressources de CSI-RS ou la quantité d'occupation de ports de CSI-RS est basée en outre sur un type de livre de code associé au paramétrage de rapport de CSI ; et
comprenant en outre :
un moyen pour recevoir une indication d'une capacité de traitement de CSI de l'UE, la capacité de traitement de CSI comprenant une indication d'au moins un parmi un nombre de ressources de CSI-RS prises en charge par l'UE ou un nombre de ports de CSI-RS pris en charge par l'UE.

15. L'appareil pour la communication sans fil selon la revendication 14, comprenant en outre des moyens pour réaliser le procédé selon l'une des revendications 7 à 10.

FIG. 1

FIG. 2

Report config #1: 13 SBs

| 0 | 0 | 1 | 1 | 1 | 1 | 1 | 1 | 1 | 1 | 1 | 1 | 1 | 1 | 1 | 0 | 0 | 0 | 0 |
|---|---|---|---|---|---|---|---|---|---|---|---|---|---|---|---|---|---|---|
| 1 | 2 | 3 | 4 | 5 | 6 | 7 | 8 | 9 | 10 | 11 | 12 | 13 | 14 | 15 | 16 | 17 | 18 | 19 |

FIG. 3

400

| BWP Size (RBs) | Subband Size (R |
|---|---|
| < 24 | N/A |
| 24 - 72 | 4, 8 |
| 73 - 144 | 8, 16 |
| 145 - 275 | 16, 32 |

FIG. 4

| CQI SB | |
|---|---|
| PMI FD unit 1 | PMI FD unit 2 |

FIG. 5

```
SupportedCSI-RS-Resource ::=        SEQUENCE {
    maxNumberTxPortsPerResource          ENUMERATED (p2, p4, p8, p12, p16, p24, p32),
    maxNumberResourcesPerBand            INTEGER (1..64),
    totalNumberTxPortsPerBand            INTEGER (2..256)
}
```

FIG. 6A

```
CSI-RS-IM-ReceptionForFeedback ::=                SEQUENCE {
    maxConfigNumberNZP-CSI-RS-PerCC                   INTEGER (1..64),
    maxConfigNumberPortsAcrossNZP-CSI-RS-PerCC        INTEGER (2..256),
    maxConfigNumberCSI-IM-PerCC                       ENUMERATED (n1, n2, n4, n8, n16, n32),
    maxNumberSimultaneousNZP-CSI-RS-PerCC             INTEGER (1..64),
    totalNumberPortsSimultaneousNZP-CSI-RS-PerCC      INTEGER (2..256)
}
```

FIG. 6B

```
CA-ParametersNR-v1540 ::=          SEQUENCE {
    simultaneousSRS-AssocCSI-RS-AllCC                          INTEGER (5..32)        OPTIONAL,
    csi-RS-IM-ReceptionForFeedbackPerBandComb                 SEQUENCE {
        maxNumberSimultaneousNZP-CSI-RS-ActBWP-AllCC              INTEGER (1..64)        OPTIONAL,
        totalNumberPortsSimultaneousNZP-CSI-RS-ActBWP-AllCC      INTEGER (2..256)       OPTIONAL,
    }                                                                                 OPTIONAL,
}
```

FIG. 6C

700

702

RECEIVE A CSI REPORTING CONFIGURATION INCLUDING ONE OR MORE CSI REPORTING SETTINGS, WHEREIN EACH CSI REPORTING SETTING IS ASSOCIATED WITH ONE OR MORE SUBBANDS FOR CSI AND EACH SUBBAND FOR CSI INCLUDES A FD UNIT FOR CQI FEEDBACK AND ONE OR MORE FD UNITS FOR PMI FEEDBACK

704

DETERMINE, FOR EACH OF THE CSI REPORTING SETTINGS, AT LEAST ONE OF AN AMOUNT OF CSI-RS RESOURCES OCCUPATION OR AN AMOUNT OF CSI-RS PORTS OCCUPATION, BASED AT LEAST IN PART ON
(1) A NUMBER OF FD UNITS FOR PMI FEEDBACK WITHIN A SINGLE FD UNIT FOR CQI FEEDBACK OR
(2) A NUMBER OF FD UNITS FOR PMI FEEDBACK WITHIN ALL OF THE SUBBANDS FOR CSI

FIG. 7

800

802

DETERMINE ONE OR MORE CSI REPORTING SETTINGS FOR A UE, WHEREIN EACH CSI REPORTING SETTING IS ASSOCIATED WITH ONE OR MORE SUBBANDS FOR CSI AND EACH SUBBAND FOR CSI INCLUDES A FD UNIT FOR CQI FEEDBACK AND ONE OR MORE FD UNITS FOR PMI FEEDBACK

804

DETERMINE, FOR EACH OF THE CSI REPORTING SETTINGS, AT LEAST ONE OF AN AMOUNT OF CSI-RS RESOURCES OCCUPATION OR AN AMOUNT OF CSI-RS PORTS OCCUPATION, BASED AT LEAST IN PART ON
(1) A NUMBER OF FD UNITS FOR PMI FEEDBACK WITHIN A SINGLE FD UNIT FOR CQI FEEDBACK OR
(2) A NUMBER OF FD UNITS FOR PMI FEEDBACK WITHIN ALL OF THE SUBBANDS FOR CSI

FIG. 8

900

914

Communicating
Component
902

160

CSI Reporting Component

920

912

Transceiver

908

924

Processor

910

Computer-Readable Medium/
Memory

Processing System

FIG. 9

FIG. 10

FIG. 11

**EP 4 011 110 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019103580 A1
- WO 2018230967 A1